# FASCICULE DE BREVET EUROPEEN

(11) **EP 2 659 098 B1**
(45) Date de publication et mention de la délivrance du brevet: **12.10.2016**
(21) Numéro de dépôt: 11817479.6
(22) Date de dépôt: 30.12.2011
(51) Int. Cl.: F01K 21/00, B01F 3/04, F01K 25/04, F01K 3/18, F01K 21/04, F22B 1/00, F03G 6/00, F01K 1/00, F01K 13/00, F01D 1/02, F01D 1/22, F01K 3/00, F01K 7/00, F28D 20/00

(54) **DISPOSITIF DE CONVERSION D'ÉNERGIE THERMIQUE EN ÉNERGIE MÉCANIQUE**
VORRICHTUNG ZUR UMWANDLUNG VON WÄRMEENERGIE IN MECHANISCHE ENERGIE
DEVICE FOR CONVERTING HEAT ENERGY INTO MECHANICAL ENERGY

(30) Priorité: 07.04.2011 FR 1101045; 30.12.2010 FR 1005173; 30.12.2010 FR 1005172
(43) Date de publication de la demande: 06.11.2013
(60) Demande divisionnaire: 15248026.5
(73) Titulaire: C3Tech Chaix & Associes Consultants En Technologies, 04860 Pierrevert (FR)
(72) Inventeur: CHAIX Jean-Edmond, F- 04860 Pierrevert (FR)
(74) Mandataire: Talbot, Alexandre
(86) Numéro de dépôt international: PCT/FR2011/000686
(87) Numéro de publication internationale: WO 2012/089940

(56) Documents cités:
- EP-A1- 2 187 051
- DE-C- 691 549
- FR-A1- 2 415 197

## Description

### Domaine technique de l'invention

L'invention concerne un dispositif de conversion d'une énergie thermique en une énergie mécanique.

### Etat de la technique

Dans un premier cas, les installations dites « en site isolé » permettent de fournir de l'énergie thermique à partir de l'énergie solaire et cette énergie thermique peut être convertie en une énergie électrique et/ou une énergie mécanique.

Le captage et la concentration d'énergie solaire sont bien connus : ils peuvent être constitués de paraboles, d'augets linéaires paraboliques, de concentrateurs plans (héliostat) qui concentrent les rayons solaires en haut d'une tour, de lentilles de Fresnel linéaires.

Les installations dites « en site isolé » comprennent par exemple une roue ou une turbine entraînée en rotation par le mélange de deux fluides, le fluide caloporteur et le fluide thermodynamique. Le mélange des deux fluides se fait par exemple dans une tuyère à l'intérieur de laquelle le fluide thermodynamique est vaporisé sous l'effet du fluide caloporteur chauffé. Le fluide thermodynamique s'expanse, ce qui crée un jet diphasique à haute vitesse.

Ce jet est injecté sur des aubes disposées autour d'un arbre qu'il entraîne en rotation de sorte à produire de l'énergie mécanique, l'arbre étant connecté à la turbine. La turbine fonctionne ainsi comme un convertisseur de l'énergie cinétique du jet en une énergie cinétique de rotation. Dans certaines applications, la turbine est par exemple une turbine Pelton.

Dans la turbine, le fluide thermodynamique et le fluide caloporteur sont partiellement séparés afin d'être récupérés et réutilisés pour former le jet diphasique. Afin qu'une telle installation fonctionne de façon correcte et optimale, il faut que le fluide caloporteur et le fluide thermodynamique soient séparés de façon optimale, par exemple à plus de 98%.

L'utilisation d'une turbine Pelton classique inventée en 1880 par Lester Pelton, composée d'une roue à action du type de celle pour récupérer l'énergie des chutes d'eau de grande hauteur, n'est pas satisfaisante pour obtenir une telle séparation des fluides du jet diphasique. La turbine baigne dans un brouillard de fluide caloporteur et de fluide thermodynamique qui est brassé par la roue à action. La vapeur de fluide thermodynamique est très difficile à extraire et nécessite souvent l'ajout d'un séparateur centrifuge supplémentaire en sortie de roue, ce qui complexifie le système.

En outre, la turbine Pelton est montée dans la cuve sur des roulements à billes qui baignent dans le mélange à haute température du fluide caloporteur et du fluide thermodynamique. Les roulements ne sont pas adaptés pour un fonctionnement à haute température et pour une roue à action tournant à grande vitesse. La durée de vie de ce type d'équipement est très faible.

Pour pallier cet inconvénient, les roulements à billes peuvent être montés dans des boîtiers disposés à l'extérieur du corps du convertisseur contenant la turbine, l'arbre de la roue passant alors par un joint tournant pour assurer l'étanchéité entre l'intérieur du convertisseur et l'extérieur. Cependant, de tels joints ne permettent pas de garantir une étanchéité parfaite et sont susceptibles d'avoir des fuites, ce qui est très dangereux car le fluide caloporteur peut s'enflammer spontanément au contact de l'air.

Dans un deuxième cas, pour des machines qui transforment de l'énergie thermique en énergie mécanique, par exemple, on utilise la détente d'un fluide thermodynamique passé de l'état liquide à l'état de vapeur, Cycle de Rankine, ou déjà sous forme gazeuse sous pression, mais fortement chauffé grâce à une source chaude de chaleur : Cycle de Joule.

Cette transformation se fait par combustion (Cycle Beau de Rochas dans les moteurs à pistons et les turbines à gaz) ou par ébullition dans un générateur de vapeur (Cycle de Rankine des machines à vapeur classiques, ou des turbines à vapeur).

Dans ces cycles, la détente du fluide thermodynamique qui est un fluide réel est une détente polytropique : la transformation se fait avec échange de chaleur et frottement et sa loi d'état est à tout moment PV^{γ} = constante entre la pression P1 et la pression P2.

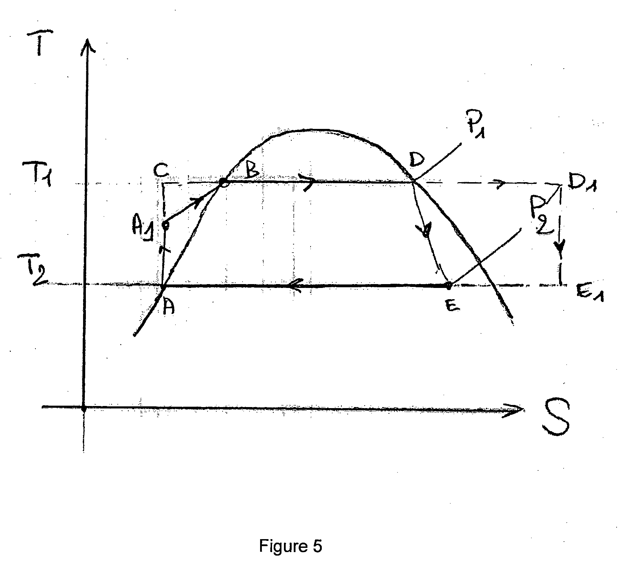

Le fluide décrit un cycle entre la source chaude et la source froide qui peut être représenté dans l'espace T (température), S (entropie) par le diagramme de la figure 5 dans lequel la surface du polygone A A1 B D E A est l'image de la puissance générée par le cycle, le segment D E représentant la détente polytropique.

Cette surface est à comparer à celle du cycle de Carnot représenté par le polygone A A1 C D D1 E1 A, dans lequel la détente représentée par le segment DD1 est une isotherme.

On constate, évidemment que le cycle de Carnot permet, toutes choses égales par ailleurs, de récupérer plus d'énergie mécanique, et cela parce que la détente du gaz se fait de façon isotherme suivant le segment D D1.

Si l'on veut augmenter le rendement d'un cycle utilisant la vapeur comme fluide thermodynamique, il faut donc la détendre de façon isotherme. Dans les turbines classiques, la détente de la vapeur se fait dans des aubages spécifiques dont la géométrie ne permet pas de lui transférer de la chaleur pendant cette évolution.

Certains convertisseurs d'énergie thermique en énergie mécanique décrits dans la littérature utilisent la détente d'un mélange d'un fluide thermodynamique (vapeur d'eau), et d'un caloporteur (du glycérol) lequel devrait assurer une certaine isothermicité en transférant des calories de la phase liquide à la phase gazeuse. Le mélange sortant d'une tuyère génératrice à grande vitesse est envoyé sur une roue à action laquelle peut entraîner un système mécanique ou un alternateur par exemple.

La génération de vapeur d'eau par mélange d'eau liquide avec de la glycérine, utilisée pour faire tourner une turbine volumétrique, est décrite dans le brevet DE 691 549 C du 30 mai 1940. Le mélange double phase obtenu, composé d'huile à haute température et d'eau, présente cependant l'inconvénient suivant : l'huile peut incorporer l'eau, ce qui conduit à une perte conséquente en énergie et à une détente non isotherme. Le dispositif décrit n'est pas fonctionnel et ne résout pas le problème posé.

Ce principe est repris pour un mélange de vapeur sous pression et de liquide, comme par exemple de l'huile, dans le brevet US 2 151 949 ou pour un mélange de gaz d'échappement et d'eau dans le brevet US-A-3 972 195 du 3 août 1976 afin d'entraîner une turbine Pelton. Dans ce dernier cas, l'évolution des gaz n'est pas isotherme car l'eau augmente le refroidissement généré par leur détente.

Dans ces systèmes, le transfert de chaleur entre phase est limité du fait que la longueur de mélange l'est aussi pour minimiser les pertes de charge. Les échanges thermiques entre gaz et liquide sont limités du fait du mauvais coefficient d'échange dans la phase gazeuse et de la brièveté de leur contact dans la tuyère. De plus, quand on mélange le glycérol et l'eau à une dizaine de bars et à 290°C de température, qui sont les conditions d'entrée dans la tuyère de détente, celui-ci absorbe instantanément 30 à 40% de l'eau. Cette eau se vaporise ensuite progressivement pendant la détente et donc entraîne la baisse de température du mélange. De la phase vapeur peut être partiellement recondensée ce qui induit des pertes importantes de rendement.

Dans ce cas, on ne peut donc pas détendre la vapeur de façon isotherme et le rendement de cycle est donc très loin du cycle de Carnot.

Dans un troisième cas, le fluide caloporteur peut également être utilisé dans des installations de stockage d'énergie thermique. Par exemple, certaines centrales solaires à concentration actuellement en construction ont en série avec le concentrateur solaire (source chaude) : un circuit du caloporteur, un module de conversion d'énergie thermique en énergie électrique et un réservoir de grande capacité qui stocke de la chaleur sous forme sensible.

Quand le soleil disparaît, le module de conversion est alimenté par la chaleur stockée dans le réservoir. Dans cette phase de restitution, la température du réservoir ne fait que décroître et ce mode d'utilisation doit s'arrêter dès que sa température ne permet plus de faire fonctionner le module de conversion d'énergie thermique en énergie électrique aux bonnes conditions. Le rendement de conversion décroît avec la température. La faible différence de température admissible entre le stockage plein et vide, environ 30°C, ajoutée à la faible chaleur spécifique des caloporteurs industriels fait que les volumes de ces systèmes atteignent des valeurs très importantes.

### Objet de l'invention

L'invention cherche à remédier au moins partiellement aux inconvénients de l'art antérieur. L'invention cherche notamment à former un convertisseur d'énergie cinétique ayant un fonctionnement amélioré avec un jet formé d'un mélange d'un fluide caloporteur et d'un gaz à haute température tout en assurant une bonne séparation du fluide caloporteur et du gaz et en garantissant un fonctionnement sûr du convertisseur. Ce but est atteint par les revendications annexées et notamment en ce que le dispositif de conversion comporte :
- une ligne d'approvisionnement en premier fluide,
- une ligne d'approvisionnement en fluide caloporteur,
- un générateur de vapeur muni :
   ∘ d'une première entrée connectée à la ligne d'approvisionnement du premier fluide, le premier fluide empruntant un premier chemin entre la première entrée et une première sortie,
   ∘ d'une deuxième entrée recevant le fluide caloporteur, le fluide caloporteur empruntant un deuxième chemin entre la deuxième entrée et une deuxième sortie, le deuxième chemin étant distinct du premier chemin, le premier chemin étant couplé thermiquement au deuxième chemin de manière à former de la vapeur à partir du premier fluide, ladite vapeur sortant du générateur par la première sortie,
- une chambre munie :
   ∘ d'une première entrée connectée à la première sortie du générateur de vapeur, le premier fluide empruntant un premier chemin dans la chambre entre la première entrée et une première sortie, la chambre étant configurée pour réaliser la détente isotherme du premier fluide dans la chambre au moyen une détente fractionnée par une pluralité de détentes élémentaires isothermes,
   ∘ d'une deuxième entrée connectée à la ligne d'approvisionnement en fluide caloporteur, le fluide caloporteur empruntant un deuxième chemin distinct du premier chemin entre la deuxième entrée et une deuxième sortie, la deuxième sortie de la chambre étant connecté à la deuxième entrée du générateur de vapeur, le premier chemin étant couplé thermiquement au deuxième chemin de manière à chauffer le premier fluide entre chaque détente,
- un dispositif de mélange connecté à la première sortie de la chambre et à la deuxième sortie du générateur de vapeur et configuré de manière à mélanger le premier fluide sous forme vapeur avec un fluide caloporteur pour obtenir un mélange double phase et toutes les autres caractéristiques de la revendication indépendante 1.

Un autre but, ne formant pas partie de l'invention présentée, concerne une installation de stockage d'énergie thermique comporte un réservoir de fluide caloporteur, un concentrateur solaire couplé au réservoir et configuré pour chauffer le fluide caloporteur, un thermoplongeur disposé dans le réservoir. Un générateur de vapeur est alimenté par le fluide caloporteur. Un alternateur est alimenté au moyen de ladite vapeur, l'alternateur étant configuré pour alimenter le thermoplongeur lorsque la température du réservoir égalise la température du fluide caloporteur en sortie du concentrateur, de manière à augmenter la température du réservoir au-dessus de la température du concentrateur.

A cet effet, une partie de la description, ne formant pas partie de l'invention, concerne un convertisseur d'énergie cinétique, à partir d'un jet formé d'un fluide caloporteur et un gaz à haute température, comprenant :
- au moins un injecteur du jet à partir d'au moins une source de fluide caloporteur et de gaz à haute température,
- une roue à action montée en rotation solidaire d'un arbre s'étendant selon un axe sensiblement perpendiculairement à l'injecteur, ladite roue comprenant une pluralité d'aubes asymétriques, le jet étant injecté sur lesdites aubes de sorte à entraîner l'arbre en rotation et à transformer l'énergie cinétique axiale du jet en énergie cinétique de rotation de l'arbre,
- une cuve entourant ladite roue à action, ladite cuve s'étendant sensiblement selon l'axe de la roue à action.

Le convertisseur d'énergie cinétique comprend au moins un déflecteur s'étendant sous les aubes, ledit déflecteur présentant une forme agencée pour récupérer le mélange de fluide caloporteur et de gaz haute température en sortie de la roue à action et rédiger ledit mélange selon une direction sensiblement tangentielle à la paroi de la cuve, ladite paroi de la cuve étant agencée pour imprimer un effet cyclone audit mélange de sorte à séparer le fluide caloporteur du gaz à haute température, la cuve comprenant des moyens de récupération du fluide caloporteur et du gaz à haute température.

Le déflecteur en sortie de roue permet de maintenir la stratification du mélange en sortie de roue et d'éviter la formation de brouillard, ce qui permet de faciliter la séparation des fluides du mélange. En outre, l'effet cyclone imprimé au mélange permet cette séparation qui se fait alors de façon optimale.

Selon d'autres aspects du convertisseur d'énergie cinétique :
- le déflecteur comprend au moins une ouverture d'entrée du mélange de fluide caloporteur et de gaz haute température en sortie de la roue à action, ladite ouverture s'étendant dans un plan sensiblement perpendiculaire à l'axe de la roue, et une ouverture de sortie du mélange, ladite ouverture s'étendant au voisinage de la paroi de la cuve et dans un plan sensiblement perpendiculaire au plan de l'ouverture d'entrée, ladite ouverture d'entrée et ladite ouverture de sortie étant reliées l'une à l'autre par une enveloppe présentant une forme courbe :
- le déflecteur comprend au moins deux ouvertures d'entrée et au moins deux ouvertures de sortie correspondantes, lesdites ouvertures étant séparées par au moins une paroi interne s'étendant dans l'enveloppe sensiblement parallèlement à celle-ci de sorte à définir au moins deux canaux de circulation dans ladite enveloppe :
- le convertisseur d'énergie comprend une pluralité d'injecteurs de jets formés d'un fluide caloporteur et un gaz à haute température et un nombre égal de déflecteurs s'étendant sous les aubes de la roue à action :
- les aubes présentent chacune une concavité asymétrique par rapport à un axe sensiblement perpendiculaire au fond de ladite concavité, l'aube comprenant une partie supérieure et une partie inférieure s'étendant de part et d'autre de l'axe, le rayon de courbure de la partie supérieure étant différent du rayon de courbure de la partie inférieure :
- l'injecteur est agencé pour injecter le jet sur la partie supérieure des aubes :
- la cuve comprend un fond de forme sensiblement tronconique, les moyens de récupération du fluide caloporteur étant agencés dans ledit fond, et une paroi de forme sensiblement cylindrique s'étendant à partir du fond selon l'axe de la roue à action :
- l'arbre de la roue est monté sur le fond de la cuve par l'intermédiaire d'au moins un palier à butée lisse de type hydrodynamique de sorte à permettre la rotation de l'arbre par rapport à la cuve.
- le convertisseur d'énergie comprend une enceinte étanche et calorifugée entourant la cuve et l'arbre de la roue à action, les moyens de récupération du gaz à haute température étant agencés dans une partie supérieure de ladite enceinte, et
- l'arbre de la roue à action sort de l'enceinte par l'intermédiaire d'un piston agencé pour assurer l'étanchéité entre l'intérieure de l'enceinte et l'extérieur de l'enceinte.

La description suivante concerne également une installation de conversion d'énergie thermique en énergie mécanique du type comprenant une source de fluide caloporteur, une source de fluide vaporisable, des moyens de chauffage du fluide caloporteur, le fluide caloporteur chauffé étant mélangé au fluide vaporisable de sorte à vaporiser ledit fluide, ledit mélangé étant injecté dans un convertisseur d'énergie cinétique sous forme d'un jet, ledit convertisseur étant agencé pour transformer l'énergie cinétique axiale du jet en énergie cinétique de rotation d'un arbre dudit convertisseur, dans laquelle le convertisseur d'énergie cinétique est tel que décrit ci-dessus.

Selon d'autres aspects de l'installation de conversion :
- l'arbre du convertisseur d'énergie est relié à un alternateur qu'il entraîne en rotation, l'alternateur étant agencé pour produire de l'énergie électrique à partir de l'énergie cinétique de rotation de l'arbre :
- les moyens de chauffage du fluide caloporteur comprennent des moyens de captation d'énergie solaire, l'énergie captée chauffant une conduite de circulation du fluide caloporteur.
- l'installation de conversion comprend des conduites de circulation du fluide caloporteur récupéré par le convertisseur d'énergie jusqu'à des moyens de stockage dudit fluide et/ou jusqu'aux moyens de chauffage dudit fluide afin de permettre la réutilisation dudit fluide et :
- l'installation de conversion comprend des conduites de circulation du gaz à haute température récupéré par le convertisseur d'énergie jusqu'à des moyens de refroidissement permettant de condenser ledit gaz et de moyens de circulation du gaz condensé jusqu'à des moyens de stockage formant la source de fluide vaporisable afin de permettre la réutilisation dudit gaz.

### Description sommaire des dessins

D'autres avantages et caractéristiques ressortiront plus clairement de la description qui va suivre de modes particuliers de réalisation de l'invention donnés à titre d'exemples non limitatifs et représentés par les figures annexées :
- la figure 1 est une représentation schématique d'une installation de conversion d'énergie thermique en énergie mécanique.
- la figure 2 est une représentation schématique en coupe d'un convertisseur d'énergie cinétique utilisé dans l'installation de la figure 1.
- la figure 3 est une représentation schématique en perspective d'un déflecteur utilisé dans le convertisseur d'énergie cinétique de la figure 2.
- la figure 4 est une représentation schématique du trajet du jet formé d'un fluide caloporteur et un gaz à haute température dans la roue à action et dans le déflecteur du convertisseur.
- la figure 5 donne une illustration des cycles de Rankine et de Carnot dans le diagramme T, S (Température, Entropie).
- la figure 6 donne le schéma des circuits permettant à partir d'un flux de glycérol chaud à 340°C selon l'invention :
   - de générer de la vapeur surchauffée à 10 bar et 290°C,
   - de la détendre de façon isotherme à 1,5 bar et 290°C,
   - de pulvériser le flux de caloporteur dans le flux de vapeur,
   - d'injecter ce mélange sur une turbine à action.
- la figure 7 donne une coupe schématique par un plan vertical du système de déversoir isotherme selon l'invention.
- la figure 8 donne une coupe schématique par un plan vertical du système de déversoir isotherme côté entrée de la vapeur selon l'invention.
- la figure 9 donne une coupe schématique par un plan vertical du système de déversoir isotherme coté sortie de la vapeur selon l'invention.
- la figure 10 donne le schéma du système de stockage.
- la figure 11 donne le schéma du système de stockage limité aux circuits et vannes ouvertes ou en régulation pendant la phase de production d'électricité et de chauffage du stock par le concentrateur.
- la figure 12 donne le schéma du système de stockage limité aux circuits et vannes ouvertes ou en régulation pendant la phase de production d'électricité et de chauffage du stock par les thermoplongeurs (grande boucle).
- la figure 13 donne le schéma du système de stockage limité aux circuits et vannes ouvertes ou en régulation pendant la phase de production d'électricité et d'aide au chauffage de la grande boucle par injection de caloporteur chaud dans celle-ci en cas de passage de nuages intermittents.
- la figure 14 donne le schéma du système de stockage limité aux circuits et vannes ouverte ou en régulation pendant la phase de production d'électricité et de régulation de température, par injection de caloporteur chaud pendant une disparition longue de la source solaire, (temps très nuageux ou nuit), le concentrateur solaire 301 étant isolé pour éviter les déperditions d'énergie (petite boucle).
- la figure 15 donne le schéma du système de stockage selon le mode de réalisation particulier utilisant des dispositifs de cuisson.

### Description des modes particuliers de réalisation

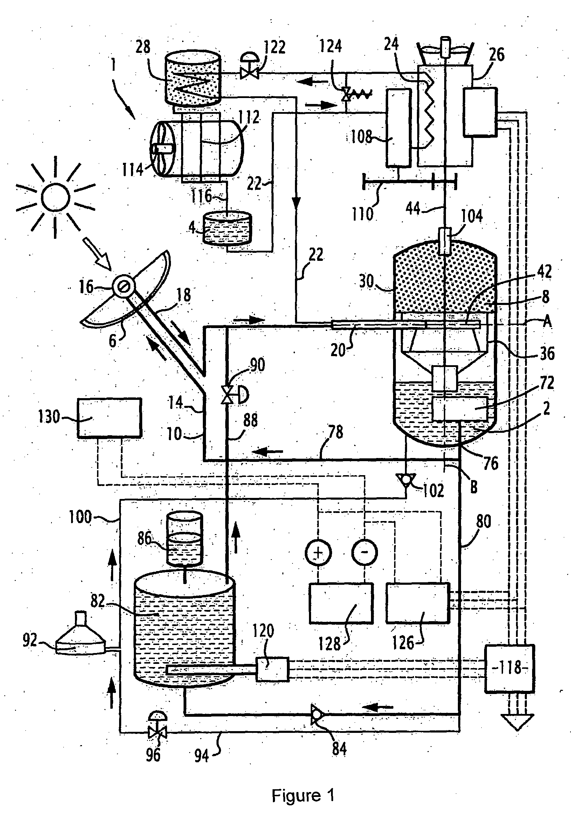

Dans un premier cas, en référence à la figure 1, on décrit une installation 1 de conversion d'énergie thermique en énergie mécanique, puis avantageusement en énergie électrique. Cette installation est notamment destinée à être utilisée en site isolé, comme par exemple dans un désert ou sur une île.

L'installation 1 comprend une source de fluide caloporteur 2, une source de fluide vaporisable 4, des moyens de chauffage 6 du fluide caloporteur, un convertisseur d'énergie cinétique 8. L'installation 1 comprend un ensemble de conduites 10 permettent de transporter le fluide caloporteur et le fluide vaporisable entre ces différents éléments.

La source de fluide caloporteur 2 est par exemple un réservoir de glycérol, dont les propriétés de fluide caloporteur sont connues et particulièrement adaptées à l'installation de conversion 1. En effet, le glycérol est destiné à être mélangé avec de l'eau, qui forme par exemple le fluide vaporisable, à haute température. Ce mélange glycérol/eau est particulièrement avantageux car il est stable chimiquement, miscible, sans azéotrope ni composés stables à haute température. Ainsi, le glycérol et l'eau peuvent être séparés après l'utilisation du mélange et ne présentent pas de risque à être utilisés en mélange.

Comme indiqué ci-dessus, la source de fluide vaporisable, ou fluide thermodynamique, est un réservoir d'eau, l'eau étant adaptée pour être vaporisée par le fluide caloporteur à haute température. Un fluide thermodynamique est un fluide servant à entrainer une turbine ou un moteur.

L'installation 1 comprend une conduite de circulation 14 permettant d'amener le fluide caloporteur de la source 2 aux moyens de chauffage 6. Ces moyens de chauffage 6 sont par exemple formés par des moyens de captation d'énergie solaire 16, l'énergie captée permet de chauffer le fluide caloporteur par exemple en chauffant la conduite de circulation 14 du fluide caloporteur. Ces moyens de captation 16 sont connus et peuvent être formés par des paraboles, des augets linéaires paraboliques, d'héliostats ou de lentilles de Fresnel linéaires.

Ces moyens de chauffage 6 permettent de chauffer le fluide caloporteur à une température de fonctionnement sensiblement comprise entre 300°C et 400°C. Alternativement, les moyens de chauffage 6 peuvent être formés par une chaudière à gaz ou autres moyens adaptés. La température de fonctionnement du fluide caloporteur dépend de sa nature et des besoins de l'installation notamment de la nature du fluide vaporisable.

En sortie des moyens de chauffage 6, une conduite 18 amène le fluide caloporteur jusqu'à un injecteur 20 formé par une tuyère.

L'eau en provenance du réservoir d'eau 4 passe par une conduite 22 qui l'amène jusqu'à l'injecteur 20 en passant par des moyens de préchauffage. Ces moyens de préchauffage comprennent par exemple une culasse réfrigérante 24 d'un alternateur 26 entraîné en rotation par le convertisseur 8, comme cela sera décrit ultérieurement et un désurchauffeur 28.

L'eau présente donc un surcroît d'énergie thermique avant son entrée dans l'injecteur 20 où elle se mélange avec le fluide caloporteur chauffé.

Dans l'injecteur, le mélange entre l'eau et le fluide caloporteur a pour effet de vaporiser l'eau du fait de la température du fluide caloporteur. Le gaz haute température formé par la vapeur d'eau se détend dans l'injecteur 20 de façon sensiblement isotherme ce qui a pour effet d'augmenter l'énergie cinétique du mélange introduit dans l'injecteur 20 de sorte qu'on obtient un jet à haute vitesse formé d'un fluide caloporteur et d'un gaz à haute température dans l'injecteur 20. Il convient de noter que la détente isotherme de la vapeur d'eau est une transformation qui présente le meilleur rendement de conversion de l'énergie thermique en énergie cinétique. Le jet obtenu présente donc une énergie cinétique importante.

L'injecteur 20 pénètre dans le convertisseur d'énergie cinétique 8 selon un axe A sensiblement horizontal.

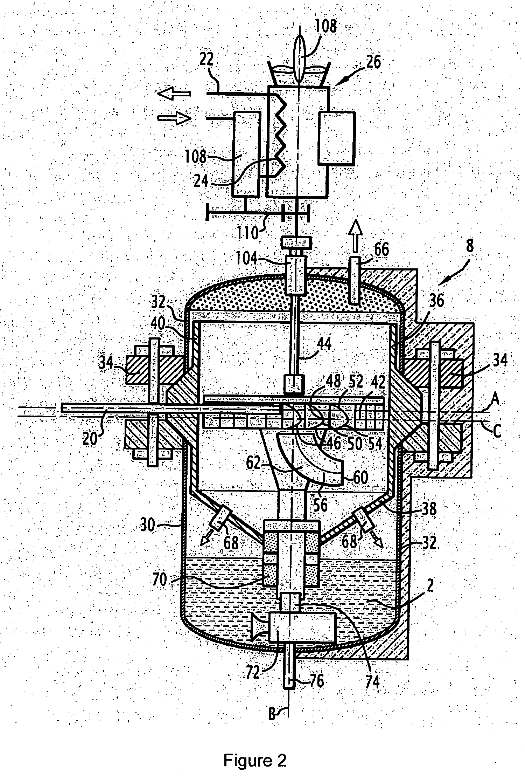

Le convertisseur d'énergie cinétique 8, plus particulièrement représenté sur la figure 2, comprend une enceinte calorifugée 30 formée de deux demi-coques 32 bombées de forme elliptique avantageusement soudées sur deux brides 34. La soudure des deux demi-coques 32 forme une enceinte 30 étanche d'axe B sensiblement vertical et perpendiculaire à l'axe A de l'injecteur 20. Le fond de l'enceinte 30 forme par exemple le réservoir de fluide caloporteur 2 où celui-ci est récolté après son passage dans le convertisseur 8, comme cela sera décrit ultérieurement.

Une cuve 36 est disposée à l'intérieur de l'enceinte 30. Cette cuve 36 est formée d'un fond 38 de forme sensiblement tronconique ou en forme d'entonnoir et d'une paroi 40 de forme sensiblement cylindrique s'étendant à partir du fond 38, le fond 38 et la paroi 40 s'étendant selon l'axe B.

Une roue à action 42 cylindrique est montée en rotation sur la cuve 36 par l'intermédiaire d'un arbre 44 s'étendant selon l'axe B sensiblement vertical. La roue à action 42 est disposée en regard de l'injecteur 20 de sorte que le jet injecté par celui-ci entraîne la roue à action 42 et l'arbre 44 en rotation de sorte à transformer l'énergie cinétique axiale du jet en énergie cinétique de rotation de l'arbre 44. La roue à action 42 est disposée dans l'enceinte 30.

La roue à action 42 comprennent une pluralité d'aubes 46 s'étendant sensiblement radialement et présentant une forme concave. La concavité 48 des aubes 46 est tournée vers l'injecteur 20 de sorte que le jet injecté provenant de l'injecteur atteint lesdites concavités 48 et entraîne la rotation de la roue 42. La concavité des aubes 46 présente une forme asymétrique par rapport à un axe C passant par le fond 50 des concavités et sensiblement perpendiculaire à ces concavités, c'est-à-dire sensiblement parallèle à l'axe dessus de l'axe C et une partie inférieure 54 s'étendant au-dessus de l'axe C et une partie inférieure 54 s'étendant en dessous de l'axe C. La partie supérieure 52 et la partie inférieure 54 présentent des rayons de courbure et des longueurs différents. En particulier, le rayon de courbure de la partie inférieure 54 est plus grand que le rayon de courbure de la partie supérieure 52, tandis que la longueur de la partie inférieure 54 est supérieure à la longueur de la partie supérieure 52.

L'injecteur 20 est agencé pour injecter le jet sur la partie supérieure 52 des aubes 46. La position de l'injection du jet sur les aubes 46 ainsi que la forme particulière de celles-ci permettent d'allonger le trajet du jet dans les aubes 46 et d'améliorer la stratification de ce jet en sortie des aubes, ce qui permet la séparation ultérieure du fluide caloporteur et du gaz à haute température. L'angle de sortie du jet des aubes 46, c'est-à-dire l'angle formé entre la tangente à l'extrémité de la partie inférieure de l'aube et l'axe horizontal C, est sensiblement compris entre 8° et 12° de sorte que le jet en sortie d'aube 46 présente une énergie cinétique plus importante que dans une turbine Pelton classique où l'angle de sortie des aubes est sensiblement compris entre 4° et 8°. Ce surcroît d'énergie cinétique permet d'améliorer la séparation du fluide caloporteur et du gaz à haute température.

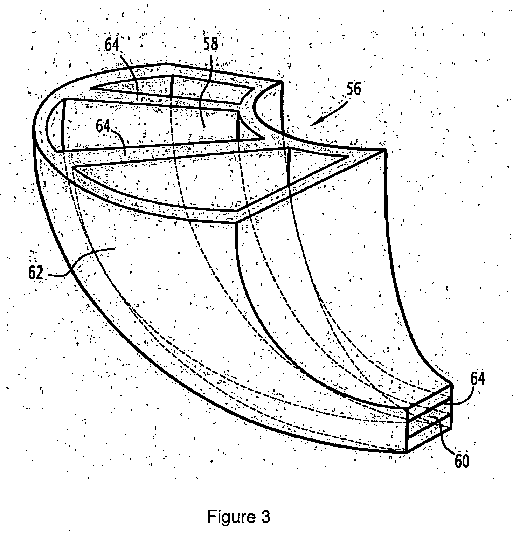

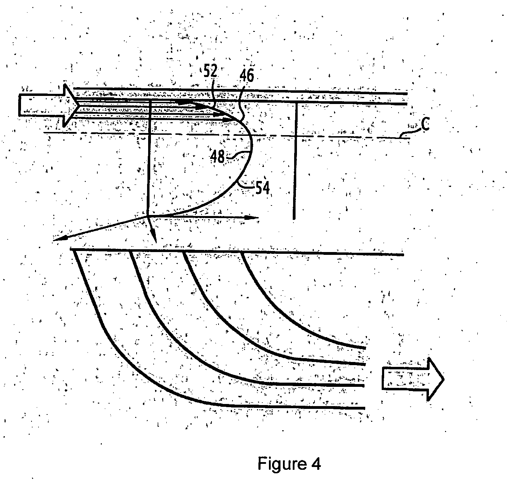

En effet, en sortie d'aube 46, le jet pénètre dans un déflecteur 56 s'étendant sous les aubes 46 et agencé pour réorienter le fluide reçu vers la paroi 40 de la cuve 36. Le déflecteur permet de stratifier le mélange du fluide caloporteur et du gaz à haute température, comme représenté sur la figure 4. En particulier le déflecteur 56, plus particulièrement représenté sur la figure 3, présente une forme agencée pour récupérer le mélange sortant de la roue 42 selon une direction sensiblement verticale et pour réorienter de façon continue ce mélange selon une direction sensiblement horizontale, comme représenté sur la figure 4, de façon à ce qu'il sorte du déflecteur 56 de façon tangentielle à la paroi 40 de la cuve 36, c'est-à-dire que le mélange sort du déflecteur 56 en longeant la paroi 40 de la cuve 36. A cet effet, le déflecteur 56 comprend au moins une ouverture d'entrée 58 du mélange de fluide caloporteur et de gaz haute température en sortie de la roue à action 42, ladite ouverture s'étendant dans un plan sensiblement perpendiculaire à l'axe B de la roue 42, c'est-à-dire un plan sensiblement horizontal, et une ouverture de sortie 60 du mélange, ladite ouverture s'étendant au voisinage de la paroi 40 de la cuve 36 et dans un plan sensiblement vertical. L'ouverture d'entrée 58 et l'ouverture de sortie 60 sont reliées l'une à l'autre par une enveloppe 62 présentant une forme courbe, comme représenté sur la figure 3. Selon le mode de réalisation particulier représenté sur la figure 3, des parois internes 64 s'étendent à l'intérieur de l'enveloppe 62 sensiblement parallèlement à celle-ci de sorte à définir des canaux de circulation du mélange dans l'enveloppe et à séparer plusieurs ouvertures d'entrée 58 et un nombre correspondant d'ouvertures de sortie 60.

La séparation du fluide caloporteur et du gaz haute température commence dans les aubes 46 par la centrifugation du mélange due à la forme des aubes 46. En passant dans le déflecteur 56, le reste du mélange est stratifié et passe de façon continue d'un écoulement selon la direction de sortie de la roue 42 à un écoulement tangentiel à la paroi 40 de la cuve 36, comme représenté sur la figure 4. Cet écoulement tangentiel provoque une centrifugation du mélange, du fait de la forme cylindrique de la paroi 40, ce qui permet d'achever la séparation du gaz haute température et du fluide caloporteur par effet cyclone. Ainsi, la séparation du mélange est réalisée de façon optimale de sorte que le fluide caloporteur et le gaz à haute température sont séparés à plus de 98 %. Le fait de prévoir une roue à action 42 en rotation autour d'un axe B sensiblement vertical permet de créer l'effet cyclone sur la paroi de la cuve, du fait qu'il est possible de placer un déflecteur 56 réorientant le mélange de façon adéquate.

Selon un mode de réalisation, le convertisseur d'énergie comprend plusieurs injecteurs 20, par exemple six comme dans une turbine Pelton classique et un nombre égal de déflecteur 56.

Une fois séparé, le fluide caloporteur est entraîné vers le fond de la cuve 36 par la gravité, tandis que le gaz haute température, formé par de la vapeur d'eau se déplace vers le haut de l'enceinte 30. La partie supérieure de l'enceinte 30 comprend des moyens par récupération 66 du gaz haute température séparé du fluide caloporteur. Le gaz haute température sort de l'enceinte par ces moyens de récupération 66 et circule dans le reste de l'installation comme cela sera décrit ultérieurement.

Le fond 38 de la cuve 36 comprend des moyens de récupération 68 du fluide caloporteur, afin que celui-ci passe dans le réservoir 2 en sortant de la cuve 40. Ces moyens de récupération 68 sont par exemple formés par des trous d'écoulement pratiqués dans le fond 38 de la cuve 36 et communiquant entre la cuve 36 et le fond de l'enceinte 30.

Le fluide caloporteur récupéré sert notamment à lubrifier au moins un palier à butée lisse 70 de type hydrodynamique par l'intermédiaire duquel l'arbre 44 de la roue à action 42 est monté en rotation sur le fond 38 de la cuve 36. En effet, le palier à butée lisse 70 baigne dans le fluide caloporteur récupéré par les moyens de récupération 68. Un tel palier 70 permet d'assurer la rotation de l'arbre 44 à grande vitesse dans un environnement à haute température avec une durée de vie importante, au contraire des classiques roulements à billes. En outre, l'installation du palier 70 à l'intérieur de l'enceinte 30 permet de ne pas avoir de problème d'étanchéité et d'éviter les fuites de caloporteur qui pourraient être dangereuse. Selon le mode de réalisation représenté sur la figure 2, le convertisseur 8 comprend deux paliers à butée lisse 70.

Dans le réservoir 2, une pompe de circulation 72 de fluide caloporteur, par exemple de type volumétrique est montée sur l'arbre 44 par l'intermédiaire d'un joint homocinétique 74. Cette pompe est reliée à une conduite de sortie 76 reliant l'intérieur de l'enceinte 30 à l'extérieur et permettant de faire circuler le fluide caloporteur vers le reste de l'installation 1. Ainsi, la pompe de circulation 72 est agencée pour aspirer le fluide caloporteur 2 du réservoir et pour l'injecter dans la conduite de sortie 76. La pompe de circulation est dépourvue de moteur d'entraînement puisque son actionnement est assuré par la rotation de l'arbre 44 de la roue à action 42 entraîné par le jet injecté par l'injecteur 20.

La conduite de sortie 76 est reliée à une conduite de circulation 78 reliée à la conduite de circulation 14 du fluide caloporteur passant par les moyens de chauffage 6. Ainsi, le fluide caloporteur sortant de l'enceinte 30 est réutilisé pour former le jet injecté par l'injecteur 20. D'autre part, la conduite de sortie 76 est avantageusement reliée à une conduite de circulation 80 reliée à un réservoir de stockage 82 en passant par un clapet de non-retour 84.

Le réservoir de stockage 82 est maintenu à pression constante, par exemple d'une dizaine de bars (1 bar étant égal à 10⁵ Pa), par la pompe de circulation 72. Le réservoir 82 peut être relié à un accu à membrane 86 servant de vase d'expansion pour compenser la dilatation ou la contraction du fluide caloporteur dans le réservoir 82. Ce réservoir de stockage 82 constitue une source d'énergie thermique, le fluide caloporteur présent dans ce réservoir 82 étant maintenu à une température élevée. Une conduite de circulation 88 relié à l'injecteur 20 s'étend entre le réservoir de stockage 82 et l'injecteur 20 de sorte que le fluide caloporteur chaud contenu dans le réservoir 82 peut être utilisé pour former le jet injecté par l'injecteur. Ainsi, lorsque les moyens de chauffage 6 ne fonctionnent plus, par exemple lors d'un passage nuageux rendent inopérant le collecteur d'énergie solaire 16 ou pendant la nuit, l'installation continue de fonctionner. Une vanne de régulation 90 est disposée sur le trajet de la conduite de circulation 88 afin de permettre la régulation des débits de circulation dans les conduites de circulation 14, 18, 78, 80, 88 du fluide caloporteur.

Une partie du fluide caloporteur sortant par la conduite de sortie 76 peut également servir à la fourniture d'énergie thermique à des plaques de cuisson et/ou à un four à pain 92, ou toute autre installation nécessitant une alimentation en énergie thermique, par l'intermédiaire d'une conduite de circulation 94 passant par une vanne de régulation 96, le fluide caloporteur utilisé étant réinjecté dans le réservoir 2 par l'intermédiaire d'une conduite de circulation 100 passant par un clapet de non-retour 102. Le fluide caloporteur utilisé par l'installation 1 permet ainsi d'avoir une source d'énergie thermique en plus de servir à la formation du jet alimentant le convertisseur d'énergie 8.

Dans un mode de réalisation particulier, l'arbre 44 de la roue à action 42 sort de l'enceinte 30 par l'intermédiaire d'un piston 104 agencé pour assurer l'étanchéité entre l'intérieur de l'enceinte 30 et l'extérieur de l'enceinte 30, par exemple un piston suédois. L'arbre 44 entraîne en rotation le rotor de l'alternateur 26, avantageusement du type à aimant permanent. Cet alternateur 26 permet de transformer l'énergie cinétique de rotation de l'arbre 44 en énergie électrique. L'alternateur 26 est refroidi, au niveau de son entrefer, par un ventilateur 106 monté sur son rotor et par une conduite de circulation d'eau, formant la culasse réfrigérante 24, qui gaine son stator. L'eau alimentant la culasse réfrigérante 24 provient du réservoir d'eau 20 et est amené à la culasse par une pompe volumétrique 108 actionnée par l'arbre 44 par l'intermédiaire d'un réducteur 110. Ainsi la pompe 108 est dépourvue de moteur d'actionnement. La culasse réfrigérante 24 sert au refroidissement de l'alternateur 26 et au préchauffage de l'eau, comme décrit précédemment.

La vapeur d'eau collectée par les moyens de récupération 66 prévus dans l'enceinte 30 est avantageusement renvoyées dans le réservoir 4. De manière préférentielle, la vapeur d'eau collectée par les moyens de récupération 66 prévus dans l'enceinte 30 est refroidie par un désurchauffeur 28 en passant par une conduite (non représentée). Cette vapeur refroidie est ensuite condensée et sous saturée dans une batterie de tubes à ailettes 112 d'un aéro-réfrigérant 114 et est reversée dans le réservoir d'eau 4 par l'intermédiaire d'une conduite de circulation 116, avant d'être réutilisée pour former le jet injecté par l'injecteur 20 comme décrit précédemment.

L'alternateur 26 est utilisé pour alimenter en énergie électrique un réseau de distribution 118, ainsi que des thermoplongeurs 120 agencés pour maintenir la température du réservoir de stockage 82 de fluide caloporteur, comme décrit précédemment.

Le fonctionnement normal de l'installation 1 décrite ci-dessus, ainsi que le fonctionnement la nuit ou lors d'un passage nuageux apparaissent clairement à la lecture de la description qui précède.

On décrit à présent le fonctionnement lors du démarrage de l'installation 1 alors que le convertisseur d'énergie 8 est à l'arrêt et que les pompes volumétriques 72 et 108 ne fonctionnent pas. Pour permettre ce démarrage, on prévoit une vanne 122 permettant de couper l'arrivée d'eau au désurchauffeur 28 et un clapet de décharge 124 reliant la culasse réfrigérante 24 à l'entrée de la pompe volumétrique 108. Lors du démarrage de l'installation, la vanne 122 est fermée et l'eau circulant par la pompe volumétrique 108 n'alimente donc pas l'injecteur 20 mais retourne à l'entrée de la pompe volumétrique par l'intermédiaire du clapet de décharge 124. L'alternateur 26 est démarré en mode synchrone par un variateur à pilotage vectoriel de champ 126, alimenté par une batterie d'accumulateur 128 qui est par exemple maintenue sous charge pendant le jour par des panneaux photovoltaïque 130. Ce démarrage de l'alternateur 26 a pour effet d'entraîner la rotation de l'arbre 44 de la roue à action 42, qui entraîne le démarrage de la pompe volumétrique 72 ainsi que celui de la pompe volumétrique 108. La circulation de fluide caloporteur et d'eau est ainsi lancée. Lorsque la température du fluide caloporteur à l'entrée de l'injection 20 atteint une température suffisante pour vaporiser l'eau, la vanne 122 est ouverte et l'installation 1 passe en fonctionnement normal.

L'installation décrite ci-dessus peut fonctionner en parfaite autonomie et est donc particulièrement adaptée à une utilisation en site isolé. Le convertisseur d'énergie 8 permet de séparer efficacement le fluide caloporteur du gaz haute température afin d'avoir un fonctionnement optimal de l'installation 1.

La nature des fluides utilisés, le fluide caloporteur et l'eau, permet de réduire les risques si une fuite venait à se produire. En effet, ces fluides ne sont pas dangereux pour la santé humaine et peuvent être manipulés facilement. En outre, ces produits sont ingérables sans risque par un organisme vivant, ce qui est favorable à la protection de l'environnement dans lequel est installée l'installation 1.

Le fonctionnement sans moteur des pompes volumétriques, ainsi que le fonctionnement réversible de l'alternateur permet d'améliorer le rendement de l'installation car le démarrage de l'installation ne nécessite pas de moteur de démarrage. En outre, cette absence de moteur améliore la fiabilité de l'installation 1 qui ne dépend pas du bon fonctionnement d'un moteur.

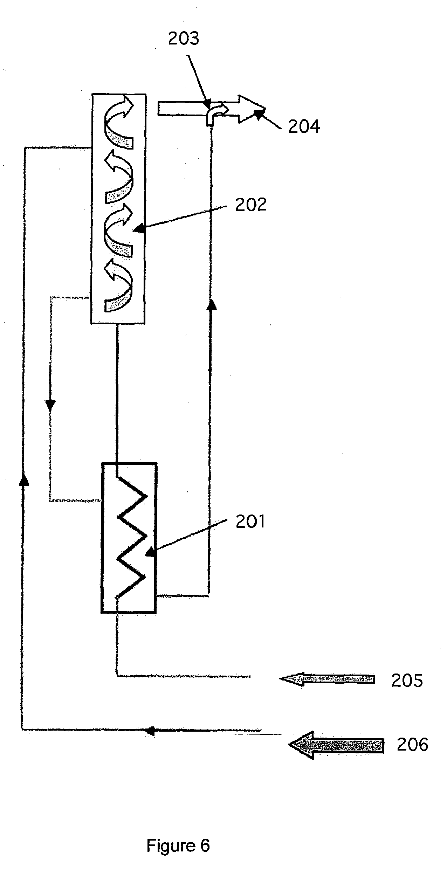

Dans un deuxième cas et selon un autre mode particulier de réalisation de l'invention, comme représenté à la figure 6, le dispositif de conversion d'énergie thermique en énergie mécanique comporte une ligne d'approvisionnement 205 en premier fluide et une ligne d'approvisionnement 206 en fluide caloporteur. Il comporte également un générateur de vapeur 201 muni d'une première entrée connectée à la ligne d'approvisionnement 205 du premier fluide. Le premier fluide emprunte un premier chemin entre la première entrée et une première sortie. Le générateur de vapeur est également muni d'une deuxième entrée recevant le fluide caloporteur. Le fluide caloporteur emprunte un deuxième chemin entre la deuxième entrée et une deuxième sortie. Le deuxième chemin est distinct du premier chemin. Le premier chemin est couplé thermiquement au deuxième chemin de manière à former de la vapeur à partir du premier fluide. La vapeur sortant du générateur 201 par la première sortie.

Le dispositif de conversion comporte encore une chambre 202 munie d'une première entrée connectée à la première sortie du générateur de vapeur 201. Le premier fluide emprunte un premier chemin dans la chambre 202 entre la première entrée et une première sortie. La chambre 202 est configurée pour réaliser la détente isotherme du premier fluide dans la chambre 205 au moyen une détente fractionnée par une pluralité de détentes élémentaires isothermes. La chambre 202 est munie d'une deuxième entrée connectée à la ligne d'approvisionnement en fluide caloporteur 206. Le fluide caloporteur emprunte un deuxième chemin distinct du premier chemin entre la deuxième entrée et une deuxième sortie. La deuxième sortie de la chambre est connectée à la deuxième entrée du générateur de vapeur 201. Le premier chemin est couplé thermiquement au deuxième chemin de manière à chauffer le premier fluide entre chaque détente.

Le dispositif de conversion comporte encore un dispositif de mélange connecté à la première sortie de la chambre 202 et à la deuxième sortie du générateur de vapeur 201. Le dispositif de mélange est configuré de manière à mélanger le premier fluide sous forme vapeur avec un fluide caloporteur pour obtenir un mélange double phase.

Par un fluide, on entend un liquide ou un gaz.

Avantageusement, la première chambre est un générateur de vapeur simple passe 201 à surchauffe variable. La deuxième chambre est un déversoir isotherme 202, maintenant la pression de sortie du générateur de vapeur 201 à pression constante, la ligne d'arrivée est un injecteur 205, un injecteur 204 est configuré avec une buse de pulvérisation 203 et la sortie du premier fluide du déversoir 202 de sorte à générer un mélange double phase.

Le dispositif permet avantageusement de générer de l'énergie mécanique à partir d'énergie thermique en trois phases séparées :
- Vaporisation et surchauffe de l'eau sous pression
- Détente isotherme qui transforme l'énergie thermique du gaz en énergie cinétique
- Transfert de l'énergie cinétique du gaz au caloporteur liquide à l'intérieur du dispositif de mélange.

Le dispositif présente un asservissement entièrement mécanique et évite d'avoir de l'électronique dans le dispositif.

Le fluide caloporteur alimente un circuit primaire associé successivement au déversoir 202, au générateur de vapeur 201 et à la buse de pulvérisation 203.

Le fluide caloporteur chaud en provenance d'une source chaude 206 est introduit dans le déversoir isotherme 202 où il réchauffe la vapeur pendant sa détente.

Le dispositif permet avantageusement de générer et de détendre de la vapeur surchauffée sous pression, de 10 bar 290°C à 1,5 bar 290°C, à partir d'un flux de fluide caloporteur. Cette détente isotherme permet de donner à la vapeur une vitesse de l'ordre de 130 m/s.

Avantageusement, le premier fluide sous forme vapeur se détend jusqu'à 1,5 bar dans le déversoir isotherme 202 tout en conservant sa température grâce à un apport calorifique du fluide caloporteur.

À la sortie du déversoir isotherme, le fluide caloporteur est introduit dans le circuit primaire d'un générateur de vapeur 201 de type simple passe à la sortie duquel il est introduit en un état de légère sous-saturation, environ 2 à 5°C, par une buse de pulvérisation 203, dans le flux de vapeur sortant à grande vitesse du détendeur pour générer un flux double phase dans un injecteur 204 lequel en sort à la pression atmosphérique.

Un générateur simple passe permet avantageusement d'avoir un système simple de circulation des fluides, à coût réduit et de diminuer les pertes dues aux frottements par rapport à un générateur multi-passes.

Le cheminement du fluide caloporteur est configuré pour dans un premier temps assurer la conservation de la température du premier fluide dans le déversoir isotherme 202. Dans un deuxième temps, il est introduit dans un « circuit primaire » du générateur de vapeur. Dans un troisième temps, le fluide caloporteur est mélangé avec le fluide sous forme vapeur pour générer le flux double phase.

Le déversoir isotherme 202 maintient à une valeur constante la pression de sortie du générateur de vapeur simple passe à surchauffe variable, 201, quel que soit le débit de vapeur produit.

Le dispositif permet ainsi de générer un mélange double phase à grande vitesse à partir de vapeur surchauffée sous pression et d'un fluide caloporteur, séparant les fonctions génération de vapeur surchauffée sous pression, détente isotherme de la vapeur et mélange de la vapeur à grande vitesse avec le caloporteur.

Par mélange double phase, on entend un mélange comportant deux phases distinctes. Il s'agit d'une phase liquide et d'une phase gazeuse. Préférentiellement, la phase gazeuse est de la vapeur d'eau. La phase liquide est un matériau caloporteur sous forme liquide. Par exemple, le matériau caloporteur peut être un fluide caloporteur comme du glycérol.

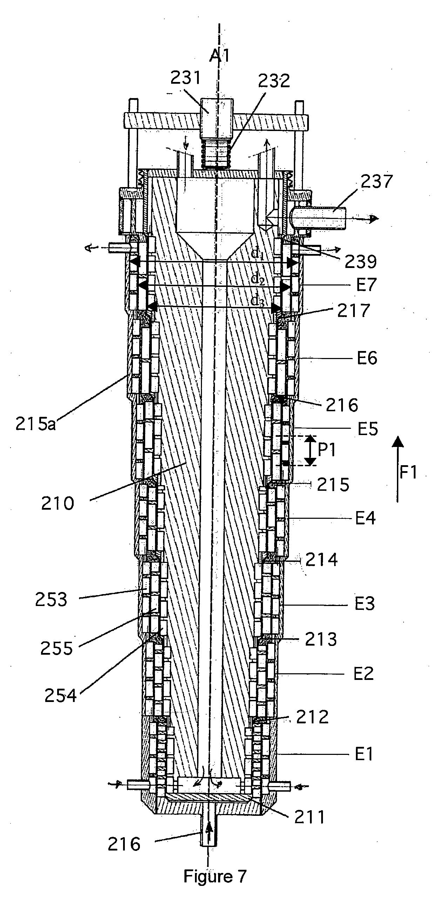

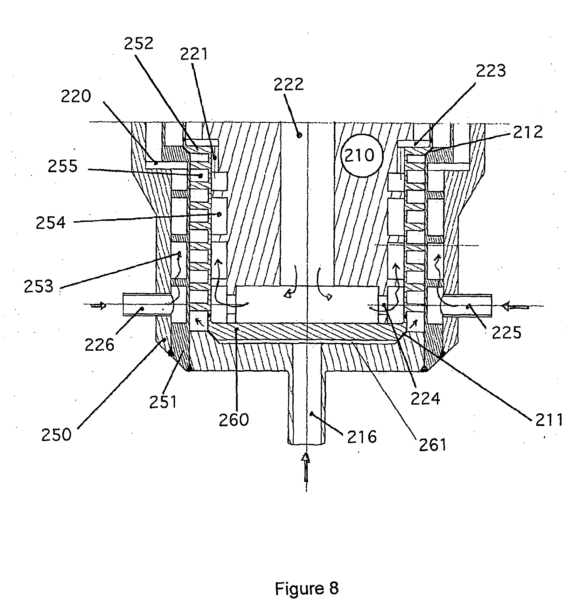

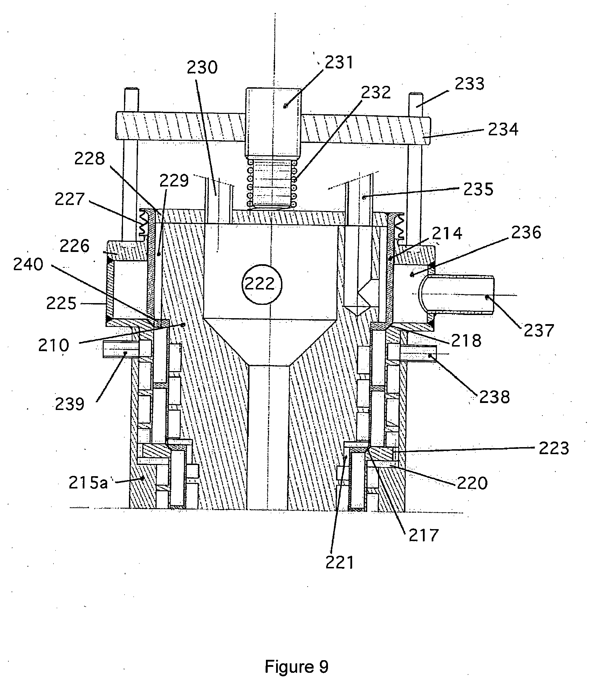

Comme représenté aux figures 7, 8 et 9, le déversoir isotherme est préférentiellement constitué d'un corps fixe 215a et d'un clapet mobile 210. L'étanchéité entre le mobile et le corps fixe est faite par un soufflet 227. Le clapet mobile et le corps fixe constituent sept étages de réchauffage séparés chacun par huit dispositifs de laminage 211, 212, 213, 214, 215, 216, 217, 239.

Selon un autre mode de réalisation, les systèmes de laminage pourraient être remplacés par des vannes.

Avantageusement, le diamètre des systèmes de laminage 211, 212, 213, 214, 215, 216, 217, 239 augmente entre l'entrée 216 et la sortie 237 du déversoir 202. Ces dispositifs sont constitués d'un cône mâle usiné sur le clapet mobile et d'un cône femelle usiné dans le corps fixe. Les cotes des ouvertures de ces ensembles clapet/siège sont déterminées pour que leur perte de charge soient identiques compte tenu de la pression, et donc du volume massique, de la vapeur à leur entrée respective.

Les diamètres des ensembles siège / clapet vont croissant entre le bas et le haut du déversoir de façon à pouvoir monter le mobile 210 dans le corps 215a.

La perte de charge de chaque dispositif de laminage est de l'ordre de 1,25 bar à tous les débits compris entre zéro et le débit nominal du détendeur. L'entrefer des dispositifs de laminage, et donc leur perte de charge, est fixé par l'antagonisme de l'action du ressort 232 et de l'effort dû à la différence de pression entre l'entée et la sortie : c'est le fonctionnement d'un déversoir détendeur industriel classique qui maintient une perte de charge constante à débit variable.

La vis 231 permet le réglage de la valeur de la détente en modifiant la compression du ressort 232. La vis 231 permet avantageusement de contrôler la perte de charge dans le circuit et donc la pression amont qui est celle en sortie du générateur de vapeur 201.

Après chaque détente dans un dispositif de laminage, la vapeur est réchauffée jusqu'au suivant par les parois qui encadrent son canal d'écoulement 255, dans la partie fixe et dans la partie mobile.

Avantageusement, le canal d'écoulement du premier fluide sous forme vapeur comporte des spirales à pas fixe entre deux dispositifs de laminage, ledit pas augmentant à chaque étage.

Par canal, on entend un filetage de section rectangulaire. Le pas est la distance qui sépare deux sections sur la même génératrice de la virole, après un tour de la spirale, il est indépendant de la section.

Avantageusement, le déversoir 202 comporte trois viroles 250, 251, 252 agencées pour former respectivement trois canaux étanches les uns par rapport aux autres. Une virole est par exemple un tube cylindrique creux.

Le corps fixe est constitué de deux viroles concentriques 250 et 251 emmanchées à chaud l'une dans l'autre et solidarisées par soudure. La virole 250 est usinée sur son diamètre extérieur en forme de vis à pas constant et à section rectangulaire dont le diamètre augmente à chaque étage.

La virole 250 forme avec la virole 251 le canal latéral d'écoulement du fluide caloporteur dans le corps 215a.

Le clapet mobile est constitué d'un noyau 210 sur lequel est taillée également une vis de pas et de profondeur constante dont le diamètre augmente à chaque étage. Par taillé, on entend usiné par exemple au tour à la fraiseuse ou avec un centre d'usinage.

Sur le noyau ainsi usiné est emmanchée à chaud une virole 252 munie d'un fond, qui délimite le canal 254 du fluide caloporteur dans le clapet mobile 210. Sur le diamètre extérieur de la virole 252 du clapet mobile 210, est taillée une spirale de profondeur constante 255, dont le pas reste constant sur un étage et augmente à chaque étage. Avantageusement, le canal spiralé à pas et diamètre variables constitue un divergent apte à laisser la vapeur s'écouler de la sortie du générateur de vapeur 201 à l'entrée de l'injecteur 204.

La section de la spirale pour un étage, et donc son pas, est proportionnelle au volume spécifique de la vapeur à la pression moyenne de l'étage considéré. Les spirales successives du canal vapeur permettent de faire varier la vitesse de la vapeur de 60 m/s à 10bar en entrée du déversoir à 130 m/s à 1,5 bar en sortie.

La vapeur chemine de l'entrée 216 à la sortie 237, via un collecteur circulaire 236, dans le canal 255 constitué d'une pluralité de spirales à pas constant, séparées par les dispositifs de laminage 211, 212, 213, 214, 215, 216, 217, 239.

Le flux de caloporteur qui chemine dans les deux canaux 253 et 254 cède de la chaleur au flux de vapeur qui chemine dans la spirale 255. Les canaux de cheminement du fluide caloporteur sont avantageusement hélicoïdaux ou spiralés et situés de part et d'autres du canal d'écoulement du premier matériau sous forme vapeur. Préférentiellement, les canaux sont à pas et profondeur fixes et leur diamètre varie à chaque étage.

Les épaisseurs résiduelles en fond de gorge de l'usinage de la virole 250 et de la virole 252 sont réduites à environ 1,5 mm de façon à favoriser l'échange de chaleur entre le caloporteur et la vapeur qui se détend.

Le jeu fonctionnel de 1 à 2/10 de mm qui permet le déplacement du clapet 210 par rapport au corps 215a se trouve entre la virole 251 et la virole 252.

La continuité des écoulements de caloporteur entre les étages du clapet mobile 210 de différents diamètres se font par le biais de lamage ou passage 223 et de trou 221.

Avantageusement, les lamages ou les trous peuvent réaliser la fonction de passage entre deux étages.

L'alimentation en caloporteur de la vis 254 du noyau se fait par une entrée 230 suivie d'un canal central 222 qui alimente la base de la vis 254 par des diaphragmes 224. La sortie se fait par des trous 240 qui débouchent dans un collecteur annulaire 229 relié à une sortie 235.

L'alimentation en caloporteur de la vis 253 du corps fixe 215a se fait par deux entrées 225 et 226. La sortie se fait par des collecteurs 238 et 239.

Avantageusement, deux entrées 225 et 226 permettent d'alimenter la vis 253 en fluide caloporteur. Selon un autre mode de réalisation, une seule entrée en fluide caloporteur est présente dans le dispositif.

Un dispositif avec deux entrées permet d'augmenter la vitesse de fluide introduite et de diminuer les pertes.

La continuité des écoulements de caloporteur entre les étages de différents diamètres se fait par le biais de lamages 220 et de trous 223.

L'utilisation d'écoulement dans des canaux hélicoïdaux pour les échanges entre fluides permet d'obtenir des améliorations importantes des coefficients d'échange du fait de l'accroissement de la turbulence. Par ailleurs le fait d'avoir un divergent en spirale permet d'obtenir une grande compacité du dispositif. Enroulé il fait environ 800 mm de haut en version plane rectiligne il ferait environ 12m de long. Le dispositif permet aussi de faire travailler ensemble de l'eau comme fluide thermodynamique et du glycérol comme caloporteur, en évitant le problème d'absorption de l'eau par celui-ci à 10bar, qui entraîne des difficultés pour obtenir une détente vraiment isotherme en double phase. L'eau se vaporisant pendant la détente, il est impossible de fournir la chaleur latente par transfert entre phase ou par apport de chaleur externe. Le glycérol possède un très gros avantage au niveau de la dangerosité : il est en effet comestible et ce dispositif permet d'éviter le phénomène de dissolution qui perturbe l'iso-thermicité de la détente. L'utilisation d'un déversoir mécanique permet d'éviter de monter une vanne de régulation et son électronique de pilotage en sortie du générateur de vapeur simple passe.

Le convertisseur d'énergie thermique en énergie mécanique permet une détente isotherme du fluide thermodynamique pour créer de la quantité de mouvement. Il peut par exemple équiper tous les modules de génération d'électricité utilisant une roue à action dont la simplicité et le rendement sont particulièrement attractifs.

Dans un autre mode préférentiel, en sortie du système de détente le débit de fluide caloporteur en légère sous saturation, environ 2 à 5°C, est injecté dans la veine gazeuse sous forme de fines gouttelettes dont la taille est réglée pour qu'elles soient entraînées pratiquement à la vitesse de la vapeur sur une courte distance. Le mélange est alors projeté sur les augets d'une turbine à action. Autrement dit, le déversoir peut comporter deux éléments, un premier élément étant mobile dans le second élément fixe.

Le second élément comporte alors une virole extérieure 250 dans laquelle est emmanchée une virole centrale 251 de sorte à délimiter un premier canal hélicoïdal 253 autour d'un axe longitudinal A1 du déversoir, ledit axe A1 s'étendant d'une première extrémité du déversoir à une seconde extrémité du déversoir. La virole extérieure 250 et la virole centrale 251 sont fixes l'une par rapport à l'autre, autrement dit elles sont situées dans un même référentiel de mouvement.

Le premier élément comporte un corps allongé 210 selon l'axe longitudinal A1 du déversoir, et pourvu, à sa surface extérieure longitudinale selon A1, d'une rainure hélicoïdale destinée à délimiter un deuxième canal hélicoïdal 254 entourant l'axe A1. Une virole intérieure 252 est emmanchée sur le corps allongé 210 de sorte à fermer la rainure à et former le deuxième canal hélicoïdal 254. Autrement dit, de manière générale, le corps allongé 210 et la virole intérieure 252 sont configurés pour délimiter le deuxième canal hélicoïdal entourant l'axe longitudinal A1.

Le premier élément est monté mobile dans le second élément de sorte que la virole intérieure 252 soit en regard de la virole centrale 251. La virole intérieure 252 et la virole centrale 251 sont configurées pour délimiter un troisième canal hélicoïdal 255. En fait, les premier, deuxième et troisième canaux hélicoïdaux 253, 254, 255 peuvent être vus comme trois spirales concentriques, le troisième canal 255 étant situé entre le premier canal 253 et le deuxième canal 254.

Le déversoir est configuré de sorte que les premier, deuxième et troisième canaux soient étanches les uns par rapport aux autres. Les premier et deuxième canaux 253, 254 sont destinés à faire passer le fluide caloporteur, tandis que le troisième canal 255 est destiné à faire passer le fluide sous forme vapeur issu du générateur de vapeur. La fonction des premier et deuxième canaux 253, 254 est de contrôler la température du fluide sous forme vapeur pour maintenir sa température constante lors de son déplacement dans le déversoir. Le premier canal peut être alimenté par un fluide caloporteur entre au moins une entrée 225, 226 au niveau de la première extrémité du déversoir, et au moins une sortie associée 238, 239 située au niveau de la seconde extrémité du déversoir. Sur les figures 7 à 9 on a deux entrées 225, 226 et deux sorties 238, 239 ce qui permet d'augmenter l'apport en fluide, mais une seule entrée et/ou une seule sortie pourrait suffire. Le deuxième canal 254 peut être alimenté en fluide caloporteur au niveau de la première extrémité (entrée 224) du déversoir par un canal central 222 formé dans le corps 210 du premier élément, ledit canal central étant relié à un flexible d'amené du fluide caloporteur au niveau de la seconde extrémité du déversoir. Le fluide caloporteur associé au deuxième canal 254 peut alors s'écouler entre l'entrée 224 et une sortie 235 située au niveau de la seconde extrémité du déversoir. Le troisième canal 255 est quant à lui alimenté au niveau de la première extrémité du déversoir, et le débit peut être réglé par un premier système de laminage 211. En fait, pour alimenter le troisième canal 255, le déversoir peut comporter une entrée 216 du fluide sous forme vapeur débouchant dans une cavité 261 dont le volume peut varier en fonction de la position du premier élément par rapport au second élément, et la cavité communique avec le troisième canal 255 via le premier système de laminage 211. Une sortie 237 du troisième canal 255 est avantageusement située au niveau de la seconde extrémité du déversoir. Au moins le premier système de laminage 211 permet avantageusement de régler la pression en amont du déversoir c'est-à-dire la pression en sortie du générateur de vapeur. En fait, sur la figure 7, les entrées respectives des premier, deuxième, troisième canaux sont situées au niveau de la première extrémité du déversoir et leurs sorties respectives au niveau de la seconde extrémité du déversoir.

Avantageusement, la pression du fluide en entrée du déversoir est de 10 bar et celle en sortie de 1,5 bar.

Comme illustré à la figure 7, pour contrôler la vitesse du fluide sous forme vapeur au travers du déversoir, ce dernier est divisé selon son axe longitudinal en plusieurs étages (sur l'exemple de la figure 7 on retrouve sept étages numérotés E1, E2, E3, E4, E5, E6, E7). Cette vitesse du fluide sous forme vapeur peut être contrôlée notamment en augmentant le pas de l'hélice du troisième canal 255 hélicoïdal et la section dudit troisième canal (en fait dans ce cas le pas correspond à la distance séparant le centre du canal entre deux portions/spires de canal selon la coupe de la figure 7 où le pas est identifié par la référence P1). Pour contrôler la vitesse et la détente du fluide de manière mécanique, le diamètre des spires d₁, d₂, d₃ respectivement des canaux hélicoïdaux 253, 255, 254 augmente entre chaque étage E1, E2, E3, E4, E5, E6, E7 selon le sens de propagation du fluide sous forme vapeur (le sens de propagation est indiqué par la flèche F1 sur la figure 7, ce sens est sensiblement parallèle à l'axe longitudinal A1 du déversoir). De plus, pour contrôler mécaniquement la détente et le débit entre chaque étage et pour conserver la vitesse du fluide, le déversoir comporte des systèmes de laminage, un système de laminage 211, 212, 213, 214, 215, 216, 217, 239 étant disposé à l'interface entre chaque étage. Un système de laminage est avantageusement mis en oeuvre par le fait qu'une face de la virole centrale 251 et une face de la virole intérieure 252 sont capables d'occuper une position proximale, dans laquelle les deux face peuvent être en contact ou séparées d'une distance selon laquelle le laminage est maximal (le système agit alors comme une vanne quasiment fermée), et une position distale selon laquelle le laminage est minimal (le système agit alors comme une vanne ouverte).

Avantageusement, l'ensemble des systèmes de laminage permet de régler efficacement la pression en amont du déversoir c'est-à-dire la pression en sortie du générateur de vapeur.

Avantageusement, la vitesse du fluide est comprise entre 50m/s et 100m/s afin d'éviter les pertes de charge, l'érosion des canaux, les frottements et turbulences qui entraînerait un mauvais laminage et/ou une détérioration des canaux. De plus, une vitesse trop élevée provoquerait une perte de sensibilité du réglage et l'action du ressort sur le dispositif serait inefficace.

Sur l'exemple des figures 7 à 9, étant donné que le diamètre d1, d2, d3 de spire de chaque canal augmente d'un étage à l'autre, il est ménagé de manière idoines des passages 220, 221, 223 pour adapter la dernière spire d'un étage à la première spire d'un étage associé selon le sens de propagation F1 du fluide sous forme vapeur pour les premier et deuxième canaux 253, 254. Le passage d'un étage à l'autre du troisième canal 255 est, quant à lui, assuré par les systèmes de laminage.

L'utilisation d'une détente fractionnée permet en cas de problème de fonctionnement, par exemple en cas de fuite, de circonscrire la fuite à un seul étage.

Etant donné la mobilité du premier élément dans le second élément, la virole intérieure 252 est séparée de la virole centrale 251 par un jeu fonctionnel pour permettre la translation du premier élément par rapport au second élément selon l'axe longitudinal A1. Ce jeu fonctionnel induit la présence de passages directs de fluide entre deux spires adjacentes de la spirale délimitant le troisième canal hélicoïdal 255. Autrement dit, le fluide se déplace majoritairement dans la direction F1 selon le canal 255 en s'enroulant autour de l'axe longitudinal A1 du déversoir et une partie du fluide passe d'une spire à l'autre par des interstices dus au jeu fonctionnel. Cependant, les bi-passes induites par ces interstices sont négligeables dans le cadre du jeu fonctionnel mis en oeuvre.

Comme indiqué, la mobilité du premier élément par rapport au second élément permet de mettre en oeuvre le laminage de manière mécanique. Le système mécanique permet d'obtenir un dispositif compact en limitant les problématiques dues à l'électronique (alimentation, entretien, etc.). La position du premier élément par rapport au second élément, et donc le réglage des systèmes de laminage, peuvent être réalisés via un système de pression 231, 232 par exemple mis en oeuvre par une vis d'appui 231 associée à un ressort 232. Le système de pression 231, 232 permet de réguler la pression afin d'avoir une pression constante en sortie du générateur de vapeur 201.

Bien entendu, sans problématique de place ou d'électronique, l'homme du métier peut réaliser les différents étages en mettant en oeuvre des vannes, par exemple électrique, distinctes pilotées à distance, et des échangeurs entre chaque vanne pour réchauffer la vapeur, dans ce cas le premier élément n'a pas besoin d'être monté mobile dans le second élément. Le nombre d'étage a été donné à titre d'exemple, bien entendu, en fonction de l'application, l'homme du métier sera apte à calibrer les étages et leurs nombres.

Dans un troisième cas et selon un autre mode de réalisation préférentiel, le caloporteur est utilisé dans une unité de stockage et de production d'énergie thermique et électrique en site isolée à partir d'énergie solaire comportant : un dispositif de captage et de concentration de l'énergie solaire, un circuit de fluide caloporteur qui transporte l'énergie thermique vers un module de conversion en énergie électrique, un système de stockage d'énergie thermique original qui permet de maintenir la production d'électricité pendant la nuit ou pendant les passages nuageux. Cette unité de production doit fonctionner sans interruption ni entretien pendant plusieurs années et des conditions climatiques rudes : température ambiante de 70°C, vents de sables, tempêtes, et environnement d'habitat vernaculaire rural non industrialisé.

Dans le stockage de l'unité de production d'énergie électrique, sa capacité, toutes choses égales par ailleurs est augmentée d'un facteur cinq par rapport à un stockage classique, car le chargement du stock se fait de deux façons différentes : d'abord par la chaleur fournie par le concentrateur solaire, puis quand la température du réservoir est égale à celle du caloporteur en sortie du concentrateur, par des thermoplongeurs électriques alimentés par l'alternateur du module de conversion d'énergie thermique en énergie électrique. La température du stock peut être portée à environ 450°C, le concentrateur chauffant d'abord le caloporteur à environ 300°C.

Dans cette configuration de stockage dit "thermoélectrique", les thermoplongeurs peuvent absorber la totalité de la puissance fournie par l'alternateur.

Selon un mode de réalisation particulier, avec une dérivation du circuit de caloporteur on peut chauffer un four à pain et des plaques de cuisson pouvant ainsi fonctionner en l'absence de soleil.

L'installation de stockage d'énergie thermique comporte un réservoir 308 de fluide caloporteur, un concentrateur solaire 301 couplé au réservoir 308 et configuré pour chauffer le fluide caloporteur, un thermoplongeur 310 disposé dans le réservoir 308. Un générateur de vapeur 302 est alimenté par le fluide caloporteur. Un alternateur 306 est alimenté au moyen de ladite vapeur, l'alternateur 306 étant configuré pour alimenter le thermoplongeur lorsque la température du réservoir 308 égalise la température du fluide caloporteur en sortie du concentrateur 301, de manière à augmenter la température du réservoir 308 au-dessus de la température du concentrateur 301.

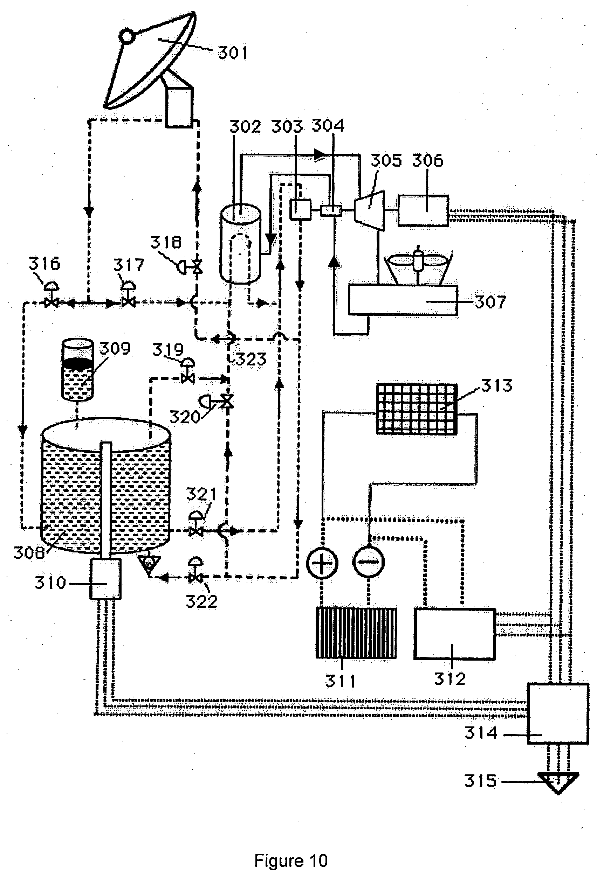

Le fonctionnement du stockage thermoélectrique est illustré par la figure 10. L'énergie thermique du rayonnement solaire est captée et concentrée dans un concentrateur 301 qui chauffe le fluide caloporteur, lequel alimente le primaire d'un générateur de vapeur 302. Celui-ci produit de la vapeur qui entraîne une turbine 305.

Sur la ligne d'arbre de la turbine sont montés : la pompe à engrenages de circulation du caloporteur 303, la pompe alimentaire 304, un alternateur 306.

La vapeur sortant de la turbine est condensée et sous-saturée dans la batterie de tubes à ailettes de l'aéro-réfrigérant 307, l'eau condensée est ensuite collectée dans le puits de l'aéro-réfrigérant et renvoyée dans le générateur de vapeur 302 par la pompe alimentaire 304.

Le réservoir de stockage 308 est maintenu comme le restant du circuit de caloporteur à une pression d'environ 5 bars par la pompe de circulation à engrenages 303.

Un accumulateur à membrane 309 sert de vase d'expansion pour compenser la dilatation ou la contraction du fluide contenu dans le réservoir de stockage et l'ensemble des circuits pendant les variations des températures.

L'alternateur débite vers un réseau de distribution 315, et vers des thermoplongeurs 310, permettant de chauffer le réservoir de stockage 308. La répartition des puissances entre le réseau utilisateur 315, et les thermoplongeurs 310, est faite par un répartiteur 314.

Le procédé décrit précédemment permet le fonctionnement de l'unité dans des phases diurnes avec ensoleillement continu ou avec un régime nuageux et dans des phases nocturnes.

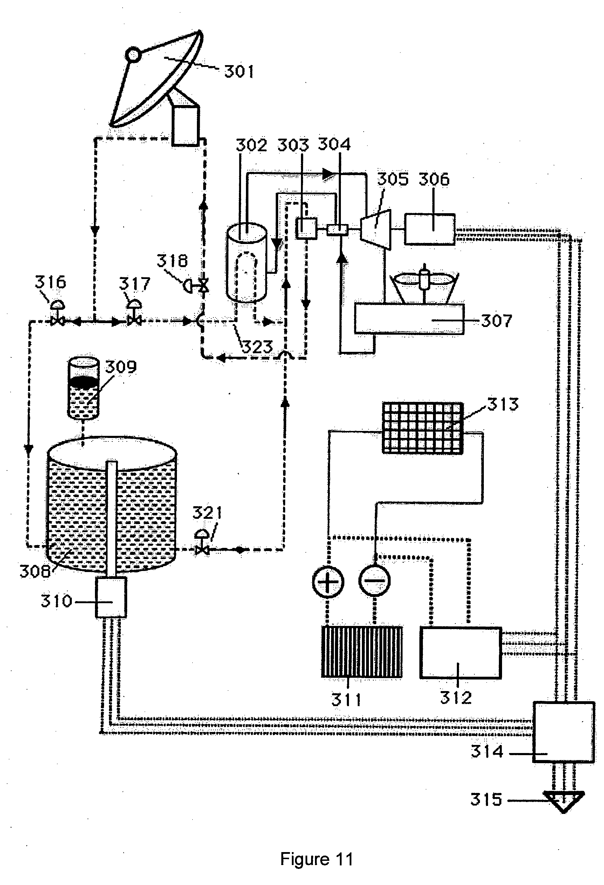

La figure 11 donne l'image des circuits et vannes ouvertes en opération de régulation pendant la phase diurne avec ensoleillement continu.

Le procédé se déroule de la façon suivante :
Dès que le concentrateur solaire focalise les rayons solaires, la ligne d'arbre est démarré par l'alternateur 306 fonctionnant en moteur et alimenté par une batterie 311, via un module de pilotage 312. La batterie est maintenue en charge grâce à des panneaux photovoltaïques 313.

Le circuit de caloporteur est disposé pour alimenter en parallèle le stock et le générateur de vapeur : les vannes 316, 317, 318 sont ouvertes, les vannes 319 322 sont fermées. La vanne de régulation 321 assure une bonne répartition des débits entre la circulation sur le stock et celle dans le primaire du générateur de vapeur. Ces deux débits se rejoignent à l'aspiration de la pompe de circulation du caloporteur 303.

Selon un mode de réalisation préférentiel, le caloporteur circule entre le concentrateur solaire 301, le réservoir 308, par le biais d'une pompe de circulation volumétrique à engrenages 303, attelée sur la ligne d'arbre de la turbine 305, laquelle, avec un accumulateur à membrane 309, maintient le réservoir 308 à une pression supérieure à la pression de saturation correspondant à la température du caloporteur.

Quand le générateur de vapeur fonctionne et que la turbine devient motrice, l'alternateur passe en mode production. La puissance nominale de l'alternateur et du concentrateur solaire est choisie pour absorber le flux solaire correspondant à la puissance à fournir au réseau plus la puissance à stocker pendant les heures d'ensoleillement.

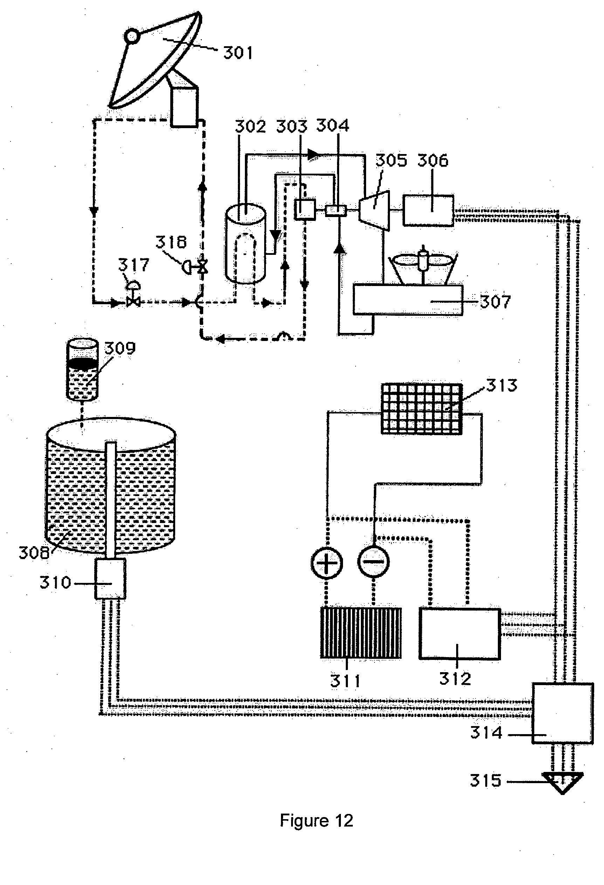

Dès que l'énergie produite par l'alternateur est supérieure à celle fournie au réseau et aux pompes 303 et 304, et que la température du stock égale la température de sortie du concentrateur, les vannes 316 et 321 sont fermées et le surplus d'énergie électrique est dissipé par effet joule dans le thermoplongeur 310 : il est ainsi stocké sous forme d'énergie thermique et la température du stockage 308 augmente en dépassant la température de sortie du concentrateur 301. Le circuit de caloporteur fonctionne en mode "grande boucle". Ce mode de fonctionnement est illustré par la figure 12.

Le réservoir 308 contenant du caloporteur est donc rechargé en énergie thermique, d'abord par un flux de caloporteur chaud provenant du concentrateur 301, puis par des éléments thermoplongeurs alimentés par l'alternateur 306 quand sa température égale celle du fluide caloporteur en sortie du concentrateur 301 et configurés de manière à ce que la température du réservoir de stockage 308 puisse atteindre une température (450°C) très supérieure à celle du caloporteur en sortie du concentrateur 301 (300°C).

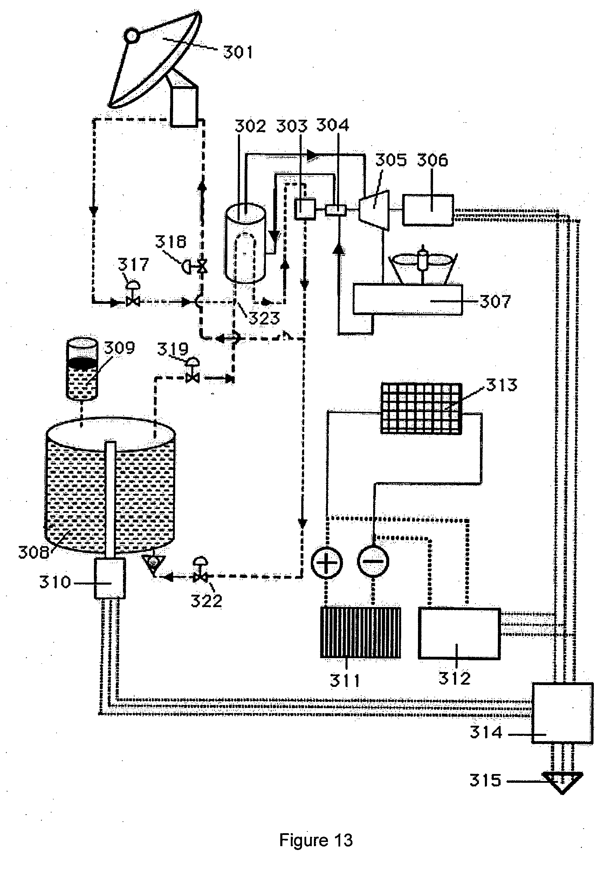

La figure 13 donne l'image des circuits et vannes ouvertes en opération de régulation dans une phase diurne avec un régime nuageux. Le procédé se déroule de la façon suivante : le passage de nuages épisodiques devant le soleil diminue le chauffage du caloporteur dans le concentrateur. La température 323 en entrée du générateur de vapeur est maintenue constante par l'ouverture de la vanne 322 et la mise en mode régulation de la vanne 319 qui injecte du caloporteur en provenance du stock 308 pendant la durée du passage du nuage. Si la période nuageuse dure trop longtemps le circuit bascule en mode nocturne.

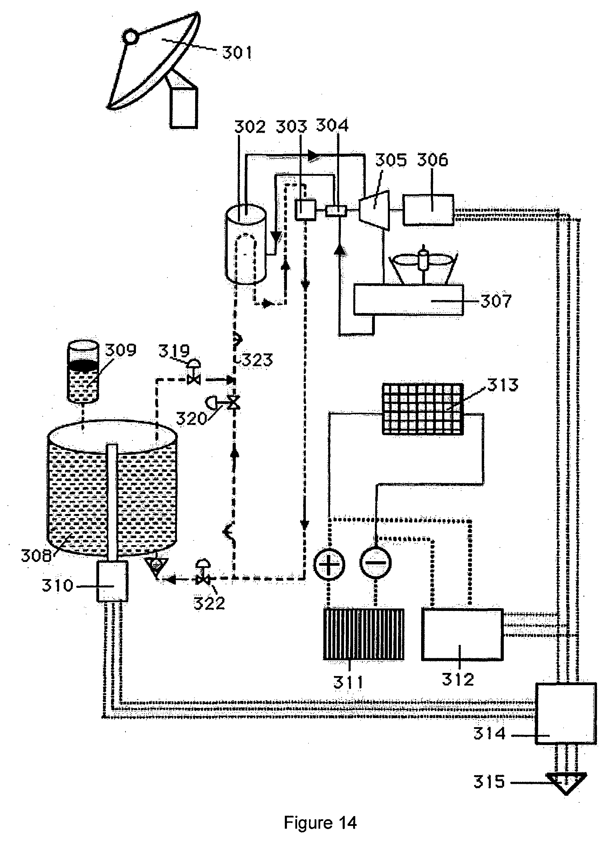

La figure 14 donne l'image des circuits et vannes ouvertes et en opération de régulation dans une phase nocturne. Le procédé se déroule de la façon suivante : dès que l'énergie solaire disparaît, les vannes 317, 318, 321 sont fermées les vannes 320 et 322 sont ouvertes et la température du caloporteur 323 à l'entrée du générateur de vapeur 302, est maintenue constante par la vanne de régulation, 319, qui injecte du caloporteur chaud en provenance du réservoir de stockage 308 dans le circuit primaire du générateur de vapeur 302. Le circuit de caloporteur fonctionne en mode "petite boucle"

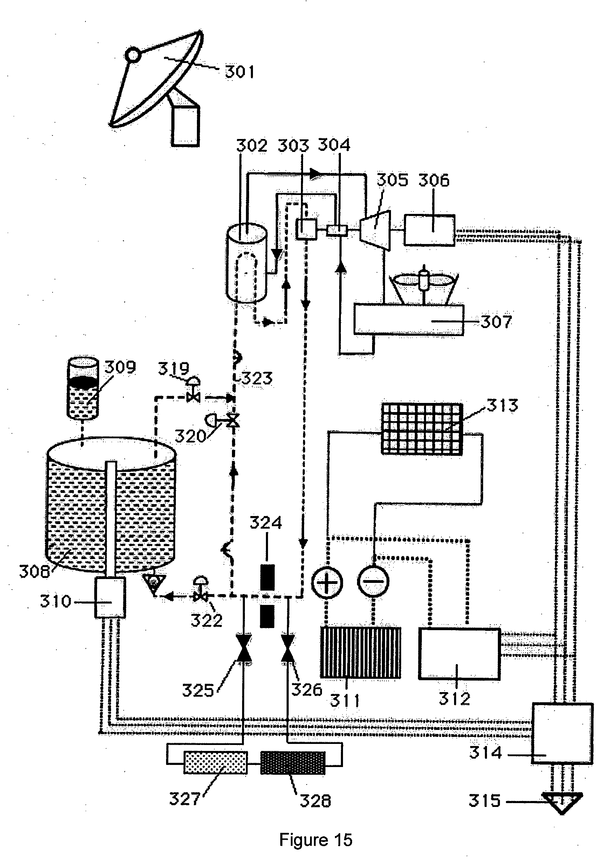

Après le coucher du soleil, on peut, par exemple, selon un mode de réalisation particulier représenté à la figure 15, chauffer un four à pain 327 et des plaques de cuisson 328 en disposant deux vannes 325 et 326 qui permettent de dériver une fraction du débit de caloporteur de la petite boucle aux bornes d'un diaphragme 324. Un circuit de dérivation est connecté entre la pompe de circulation 303 et le réservoir 308 afin d'alimenter un four à pain 327 et des tables de cuisson 328.

Une bande de sortie est couplée à l'alternateur 306 et est destinée à alimenter un réseau de distribution 315. Le répartiteur 315 est disposé entre la bande de sortie et l'alternateur, les thermoplongeurs étant connecté à l'alternateur au moyen du répartiteur. Le répartiteur est configuré pour basculer majoritairement la puissance de l'alternateur sur les thermoplongeurs.

Lors du déclenchement du réseau utilisateur 315 pendant l'ensoleillement, par exemple sur défaut d'isolement, la puissance absorbée devenant nulle la charge de l'alternateur le devient aussi et la turbine est déchargée instantanément.

Le transitoire de charge est évité car la puissance fournie par la machine est dirigée vers le thermoplongeur par le répartiteur 314.

Si la capacité de stockage est atteinte (la température du stock étant de 450°C), le concentrateur solaire est dé focalisé par rotation des miroirs qui le composent. Si ce déclenchement se produit en l'absence de soleil la puissance de l'alternateur est d'abord basculée sur les thermoplongeurs 310, puis réduite lentement.

Préférentiellement, les thermoplongeurs 310 sont configurés pour répartir la totalité de la puissance de l'alternateur. La turbine 305 n'entraîne que les pompes 303 et 304 pour maintenir le circuit en arrêt chaud.

Le régime de fonctionnement de l'alternateur est ainsi conservé à son point nominal, pendant la perte de la charge du réseau utilisateur 315 sans transitoire thermique et sans ouverture des soupapes de sûreté du générateur de vapeur 302.

Dans cette situation le débit est nominal dans le diaphragme 324 et la turbine en rotation à puissance minimum pour limiter la consommation du stock au minimum. Cette façon de traiter le transitoire de déclenchement réseau permet de ne pas perdre de fluide thermodynamique comme cela se produit sur ouverture de soupapes dans un cycle classique de Rankine utilisant des turbines à vapeur. Cette particularité permet également de ne pas perdre d'énergie solaire pendant l'interruption du réseau de l'utilisateur grâce au stockage thermoélectrique et d'éviter un contrôle commande compliqué pouvant redémarrer en automatique dès le rétablissement de la demande du réseau.

Les auxiliaires de l'unité n'ont pas de moteur d'où une augmentation du rendement global et de la fiabilité en environnement désertique. Le fait que l'alternateur à aimants permanents soit réversible, permet de faire tourner les pompes lors du démarrage de l'installation : cela évite d'avoir un moteur de démarrage.

L'utilisation d'une pompe à engrenages pour faire circuler le caloporteur permet de pressuriser le réservoir de stockage sans utiliser une autre pompe spécifique. L'utilisation d'un stockage thermoélectrique permet de traiter le problème inhérent aux centrales solaires : disparition puis réapparition du soleil lors du passage d'un nuage, disparition du soleil pendant la nuit, déclenchement intempestif du réseau utilisateur en évitant le gaspillage de fluide et d'énergie captée.

De plus le stockage et une dérivation de la pompe de circulation peuvent chauffer des tables de cuisson et un four à pain après le coucher du soleil. Cela permettrait d'éviter la déforestation qui se produit dans les zones sahéliennes, sur des îles comme Haïti où la population coupe de façon intensive la végétation pour entretenir les feux domestiques destinés à faire cuire les aliments.

Ce type de stockage, et l'unité de production d'énergie qui va avec, est une bonne réponse à la production d'énergie en site isolé qui demande de jour comme de nuit de l'énergie thermique et électrique pour les besoins vitaux de populations villageoises.

## Revendications

1. Dispositif de conversion d'une énergie thermique en une énergie mécanique comportant :
- une ligne d'approvisionnement (205) en premier fluide,
- une ligne d'approvisionnement (206) en fluide caloporteur,
- un générateur de vapeur (201) muni :
∘ d'une première entrée connectée à la ligne d'approvisionnement (205) du premier fluide, le premier fluide empruntant un premier chemin entre la première entrée et une première sortie,
∘ d'une deuxième entrée recevant le fluide caloporteur, le fluide caloporteur empruntant un deuxième chemin entre la deuxième entrée et une deuxième sortie, le deuxième chemin étant distinct du premier chemin, le premier chemin étant couplé thermiquement au deuxième chemin de manière à former de la vapeur à partir du premier fluide, ladite vapeur sortant du générateur (201) par la première sortie,
- une chambre (202) munie :
∘ d'une première entrée connectée à la première sortie du générateur de vapeur (201), le premier fluide empruntant un premier chemin dans la chambre (202) entre la première entrée et une première sortie, la chambre (202) étant configurée pour réaliser la détente isotherme du premier fluide dans la chambre (205) au moyen une détente fractionnée par une pluralité de détentes élémentaires isothermes,
∘ d'une deuxième entrée connectée à la ligne d'approvisionnement en fluide caloporteur (206), le fluide caloporteur empruntant un deuxième chemin distinct du premier chemin entre la deuxième entrée et une deuxième sortie, la deuxième sortie de la chambre étant connecté à la deuxième entrée du générateur de vapeur (201), le premier chemin étant couplé thermiquement au deuxième chemin de manière à chauffer le premier fluide entre chaque détente,
- un dispositif de mélange (204) connecté à la première sortie de la chambre (202) et à la deuxième sortie du générateur de vapeur (201) et configuré de manière à mélanger le premier fluide sous forme vapeur avec un fluide caloporteur pour obtenir un mélange double phase,
**caractérisé en ce que** :
- la chambre (202) est un déversoir isotherme configuré pour maintenir la pression de sortie du générateur de vapeur (201) à une pression constante,
- le dispositif de mélange (204) est configuré avec une buse de pulvérisation (203) et la première sortie du déversoir isotherme (202) de sorte à générer un mélange double phase.

2. Dispositif selon la revendication 1, **caractérisé en ce que** le générateur de vapeur (201) est configuré de manière à transformer le premier fluide sous forme vapeur à une pression de 10⁶ Par.

3. Dispositif selon l'une des revendications 1 et 2, **caractérisé en ce que** le dispositif de mélange (204) est configuré de manière à ce que le fluide caloporteur soit en état de légère sous-saturation d'environ 2 à 5°C, à la pression atmosphérique en sortie du dispositif de mélange (204).

4. Dispositif selon l'une quelconque des revendications 1 à 3, **caractérisé en ce que** le déversoir isotherme est configuré de manière à ce que premier fluide sous forme vapeur se détend jusqu'à 1,5.10⁵ Pa dans le déversoir isotherme (202).

5. Dispositif selon l'une quelconque des revendications 1 à 4, **caractérisé en ce que** le déversoir isotherme (202) comporte huit dispositifs de laminage (211, 212, 213, 214, 215, 216, 217, 239) espacés par des zones de réchauffage du premier fluide sous forme vapeur.

6. Dispositif selon la revendication 5, **caractérisé en ce que** le diamètre des systèmes de laminage (211, 212, 213, 214, 215, 216, 217, 239) augmente entre l'entrée (216) et la sortie (237) du déversoir (202).

7. Dispositif selon l'une quelconque des revendications 1 à 6, **caractérisé en ce que** le déversoir isotherme (202) comprend un clapet mobile (210) monté dans un corps fixe (215a).

8. Dispositif selon l'une quelconque des revendications 1 à 7, **caractérisé en ce que** le déversoir isotherme (202) comprend un canal d'écoulement (255) du premier fluide sous forme vapeur, ledit canal comportant des spirales à pas fixe entre deux dispositifs de laminage, ledit pas augmentant à chaque étage.

9. Dispositif selon la revendication 8, **caractérisé en ce que** le canal spiralé (255) est configuré pour laisser la vapeur s'écouler de la sortie du générateur de vapeur (201) à l'entrée du dispositif de mélange (204).

10. Dispositif selon l'une des revendications 8 et 9, **caractérisé en ce que** le déversoir (202) comporte des canaux hélicoïdaux (253) et (254) situés de part et d'autre du canal d'écoulement (255) du premier fluide sous forme vapeur, lesdits canaux étant à pas et profondeur fixes et dont le diamètre varie à chaque étage, et configurés pour écouler le fluide caloporteur.

11. Dispositif selon l'une quelconque des revendications 1 à 10, **caractérisé en ce que** le déversoir isotherme (202) comporte trois viroles (250, 251 et 252) agencées pour former respectivement trois canaux étanches les uns par rapport aux autres.

12. Dispositif selon la revendication 11 et 7, **caractérisé en ce que** le corps fixe (215a) comporte deux viroles (250, 251), les deux viroles (250) et (251) du corps fixe (215a) étant fixes l'une par rapport à l'autre et **en ce que** la virole (252) est fixée sur le clapet mobile (210).

13. Dispositif selon la revendication 12, **caractérisé en ce qu'**un jeu fonctionnel permettant le déplacement du clapet mobile (210) par rapport au corps fixe (215a) est disposé entre les deux viroles (250, 251) du corps fixe (215a).

14. Dispositif selon l'une des revendications 12 et 13, **caractérisé en ce que** le canal spiralé à pas et diamètre variables (255) est situé sur le diamètre extérieur de la virole (252) du clapet mobile (210).

## Patentansprüche

1. Vorrichtung zum Umwandeln einer thermischen Energie in eine mechanische Energie, die umfasst:
- eine Leitung (205) zur Versorgung mit einem ersten Fluid,
- eine Leitung (206) zur Versorgung mit einem wärmeleitenden Fluid,
- einen Dampferzeuger (201), der versehen ist mit:
∘ einen ersten Eingang, der an die Leitung (205) zur Versorgung mit dem ersten Fluid angeschlossen ist, wobei das erste Fluid einen ersten Weg nimmt zwischen dem ersten Eingang und einem ersten Ausgang,
∘ einen zweiten Eingang, der das wärmeleitende Fluid aufnimmt, wobei das wärmeleitende Fluid einen zweiten Weg zwischen dem zweiten Eingang und einem zweiten Ausgang nimmt, der zweite Weg ein anderer als der erste Weg und der erste Weg thermisch mit dem zweiten Weg gekoppelt ist und so ausgehend von dem ersten Fluid Dampf bildet, welcher Dampf durch den ersten Ausgang aus dem Generator (201) austritt,
- eine Kammer (202), die versehen ist mit:
∘ einem ersten Eingang, der mit dem ersten Ausgang des Dampferzeugers (201) verbunden ist, wobei das erste Fluid einen ersten Weg in der Kammer (202) zwischen dem ersten Eingang und einem ersten Ausgang nimmt und die Kammer (202) so vorgesehen ist, dass sie die isotherme Entspannung in der Kammer (205) über eine fraktionierte Entspannung mit Hilfe einer Mehrzahl einzelner isothermer Entspannungen sicherstellt,
∘ einem zweiten Eingang, der mit der Leitung zur Versorgung mit dem wärmeleitenden Fluid (206) verbunden ist, wobei das wärmeleitende Fluid einen zweiten Weg nimmt, der nicht der gleiche ist wie der erste Weg, zwischen dem zweiten Eingang und einem zweiten Ausgang, wobei der zweite Ausgang der Kammer an den zweiten Eingang des Dampferzeugers (201) angeschlossen und der erste Weg thermisch mit dem zweiten Weg gekoppelt ist und so das erste Fluid zwischen jeder Entspannung erwärmt,
- eine Mischvorrichtung (204), die mit dem ersten Ausgang der Kammer (202) und dem zweiten Ausgang des Dampferzeugers (201) verbunden und so vorgesehen ist, dass sie das erste, dampfförmige Fluid mit einem wärmeleitenden Fluid vermischt, um eine Doppelphasenmischung zu erhalten,
**dadurch gekennzeichnet, dass**
- die Kammer (202) ein isothermer Ablauf ist, der so vorgesehen ist, dass er den Ausgangsdruck des Dampferzeugers (201) auf einem konstanten Druck hält,
- die Mischvorrichtung (204) mit einer Zerstäubungsdüse (203) und dem ersten Ausgang des isothermen Ablaufs (202) versehen ist und so eine Doppelphasenmischung erzeugt.

2. Vorrichtung nach Anspruch 1, **dadurch gekennzeichnet, dass** der Dampferzeuger (201) so vorgesehen ist, dass er das erste dampfförmige Fluid bei einem Druck von 10⁶ Pa umwandelt.

3. Vorrichtung nach einem der Ansprüche 1 und 2, **dadurch gekennzeichnet, dass** die Mischvorrichtung (204) so vorgesehen ist, dass das wärmeleitende Fluid bei atmosphärischem Druck am Ausgang der Mischvorrichtung (204) in einem leicht untersättigten Zustand von etwa 2 bis 5°C ist.

4. Vorrichtung nach einem der Ansprüche 1 bis 3, **dadurch gekennzeichnet, dass** der isotherme Ablauf so vorgesehen ist, dass das erste, dampfförmige Fluid sich in dem isothermen Ablauf (202) bis auf 1,5.10⁵ Pa entspannt.

5. Vorrichtung nach einem der Ansprüche 1 bis 4, **dadurch gekennzeichnet, dass** der isotherme Ablauf (202) acht Laminiervorrichtungen (211, 212, 213, 214, 215, 216, 217, 239) aufweist, die durch Erwärmungszonen für das erste, gasförmige Fluid beabstandet sind.

6. Vorrichtung nach Anspruch 5, **dadurch gekennzeichnet, dass** der Durchmesser der Laminiersysteme (211, 212, 213, 214, 215, 216, 217, 239) zwischen dem Eingang (216) und dem Ausgang (237) des Ablaufs (202) zunimmt.

7. Vorrichtung nach einem der Ansprüche 1 bis 6, **dadurch gekennzeichnet, dass** der isotherme Ablauf (202) eine bewegliche Klappe (210) aufweist, die in einem festen Körper (215a) montiert ist.

8. Vorrichtung nach einem der Ansprüche 1 bis 7, **dadurch gekennzeichnet, dass** der isotherme Ablauf (202) einen Ablaufkanal (255) für das erste, dampfförmige Fluid aufweist, welcher Kanal Spiralen mit fester Teilung zwischen zwei Laminiervorrichtungen umfasst, wobei die Teilung auf jeder Stufe größer wird.

9. Vorrichtung nach Anspruch 8, **dadurch gekennzeichnet, dass** der Spiralkanal (255) so konstruiert ist, dass er den Dampf aus dem Ausgang des Dampferzeugers (201) zum Eingang der Mischvorrichtung (204) strömen lässt.

10. Vorrichtung nach einem der Ansprüche 8 und 9, **dadurch gekennzeichnet, dass** der Ablauf (202) schraubenförmige Kanäle (253) und (254) umfasst, die beidseits vom Strömungskanal (255) für das erste, dampfförmige Fluid angeordnet sind, welche Kanäle eine festgelegte Teilung und Tiefe haben, und deren Durchmesser auf jeder Stufe variiert und die so konstruiert sind, dass das wärmeleitfähige Fluid abströmen kann.

11. Vorrichtung nach einem der Ansprüche 1 bis 10, **dadurch gekennzeichnet, dass** der isotherme Ablauf (202) drei Ringe (250, 251 und 252) umfasst, die so angeordnet sind, dass sie jeweils drei zueinander dichte Kanäle bilden.

12. Vorrichtung nach Anspruch 11 und 7, **dadurch gekennzeichnet, dass** der feste Körper (215a) zwei Ringe (250, 251) umfasst, wobei die beiden Ringe (250) und (251) des festen Körpers (215a) zueinander fest sind, sowie dadurch, dass der Ring (252) an der beweglichen Klappe (210) befestigt ist.

13. Vorrichtung nach Anspruch 12, **dadurch gekennzeichnet, dass** zwischen den beiden Ringen (250, 251) des festen Körpers (215a) ein funktionales Spiel vorgesehen ist, das das Bewegen der beweglichen Klappe (210) bezüglich dem festen Körper (215a) erlaubt.

14. Vorrichtung nach einem der Ansprüche 12 und 13, **dadurch gekennzeichnet, dass** der Spiralkanal mit variabler Teilung und variablem Durchmesser (255) am Außendurchmesser des Rings (252) der beweglichen Klappe (210) vorgesehen ist.

## Claims

1. Device for conversion of a thermal energy into a mechanical energy, comprising:
- a first fluid supply line (205),
- a coolant fluid supply line (206),
- a vapour generator (201) having:
∘ a first inlet connected to the first fluid supply line (205), the first fluid following a first path between the first inlet and a first outlet,
∘ a second inlet receiving the coolant fluid, the coolant fluid following a second path between the second inlet and a second outlet, the second path being different from the first path, the first path being thermically coupled to the second path so as to form vapour from the first fluid, said vapour leaving the generator (201) through the first outlet,
- a chamber (202) provided with:
∘ a first inlet connected to the vapour generator's (201) first outlet, the first fluid following a first path within the chamber (202) between the first inlet and a first outlet, the chamber (202) being configured to realize the isothermal decompression of the first fluid in the chamber (205) through a decompression split by a plurality of elementary isothermal decompressions,
∘ a second inlet connected to the coolant fluid supply line (206), the coolant fluid following a second path different from the first path between the second inlet and a second outlet, the second outlet of the chamber being connected to the second inlet of the vapour generator (201), the first path being thermically coupled to the second path so as to heat the first fluid between each decompression,
- a mixing device (204) connected to the chamber's (202) first outlet and to the vapour generator's (201) second outlet and configured so as to mix the first vapourous fluid with a coolant fluid to obtain a double phase mixture,
**characterized in that**
- the chamber (202) is an isothermal spillway configured to maintain the vapour generator's (201) outlet pressure at a constant pressure,
- the mixing device (204) is configured with a spray nozzle (203) and the first outlet of the isothermal spillway (202) so as to create a double phase mixture.

2. Device as claimed in claim 1, **characterized in that** the vapour generator (201) is configured so as to transform the first vapourous fluid at a pressure of 10⁶ Pa.

3. Device as claimed in one of claims 1 and 2, **characterized in that** the mixing device (204) is configured in a way to put the coolant fluid in a slight undersaturation state of about 2 to 5°C at atmospheric pressure at the mixing device's (204) outlet.

4. Device as claimed in one of claims 1 to 3, **characterized in that** the isothermal spillway is configured in a way that the first vapourous fluid relaxes to 1.5.10⁵ Pa in the isothermal spillway (202).

5. Device as claimed in one of claims 1 to 4, **characterized in that** the isothermal spillway (202) comprises eight lamination devices (211, 212, 213, 214, 215, 216, 217, 239) spaced by first vapourous fluid preheating zones.

6. Device as claimed in claim 5, **characterized in that** the lamination systems' (211, 212, 213, 214, 215, 216, 217, 239) diameter increases between the spillway's (202) inlet (216) and outlet (237).

7. Device as claimed in one of claims 1 to 6, **characterized in that** the isothermal spillway (202) comprises a movable flap (210) mounted in a fixed body (215a).

8. Device as claimed in one of claims 1 to 7, **characterized in that** the isothermal spillway (202) comprises a discharge channel (255) for the first vapourous fluid, which channel comprises fixed pitch spirals between two lamination devices, the pitch increasing at each level.

9. Device as claimed in claim 8, **characterized in that** the spiral channel (255) is configured to let the vapour flow from the vapour generator's (201) outlet to the mixing device's (204) inlet.

10. Device as claimed in one of claims 8 and 9, **characterized in that** the spillway (202) comprises helicoidal channels (253) and (254) located on both sides of the discharge channel (255) of the first vapourous fluid, said channels having fixed pitch and deepness and the diameter of which varies at each level, and configured to let the coolant fluid flow.

11. Device as claimed in one of claims 1 to 10, **characterized in that** the isothermal spillway (202) comprises three ferrules (250, 251 and 252) provided such to respectively form three channels which are tight relative to each other.

12. Device as claimed in claims 11 and 7, **characterized in that** the fixed body (215a) comprises two ferrules (250, 251), the two ferrules (250) and (251) of the fixed body (215a) being fixed relative to each other and **in that** the verrule (252) is fixed to the movable flap (210).

13. Device as claimed in claim 12, **characterized in that** a functional clearance allowing movement of the movable flap (210) relative to the fixed body (215a) is provided between the two ferrules (250, 251) of the fixed body (215a).

14. Device as claimed in one of claims 12 and 13, **characterized in that** the spiral channel with varying pitch and diameter (255) is located on the outer diameter of the movable flap's (210) ferrule (252).
